# EUROPÄISCHE PATENTSCHRIFT

(11) **EP 4 118 628 B1**
(45) Veröffentlichungstag und Bekanntmachung des Hinweises auf die Patenterteilung: **22.07.2026**
(21) Anmeldenummer: 21712750.5
(22) Anmeldetag: 12.03.2021
(51) Int. Cl.: G06T 19/00

(54) **VERFAHREN UND VORRICHTUNG ZUM PRÄZISEN AUSWÄHLEN EINER RAUMKOORDINATE MITTELS EINES DIGITALEN BILDES**
METHOD AND DEVICE FOR PRECISELY SELECTING A SPATIAL COORDINATE BY MEANS OF A DIGITAL IMAGE
PROCÉDÉ ET DISPOSITIF POUR SÉLECTIONNER DE MANIÈRE PRÉCISE UNE COORDONNÉE SPATIALE AU MOYEN D'UNE IMAGE NUMÉRIQUE

(30) Priorität: 13.03.2020 DE 102020107010
(43) Veröffentlichungstag der Anmeldung: 18.01.2023
(73) Patentinhaber: NavVis GmbH, 80636 München (DE)
(72) Erfinder: MANSOOR, Fahad, 80636 München (DE); HUITL, Robert, 80636 München (DE); NEBLICH, Raphael, 80636 München (DE); CALI, Lisa, 80636 München (DE); HARTMANN, Tamino, 80636 München (DE); ROMBERG, Stefan, 80636 München (DE); SCHROTH, Georg, 80636 München (DE)
(74) Vertreter: Meissner Bolte Partnerschaft mbB
(86) Internationale Anmeldenummer: PCT/EP2021/056352
(87) Internationale Veröffentlichungsnummer: WO 2021/180932

(56) Entgegenhaltungen:
- SCANNER2GO GMBH: "09 - Leica CloudWorx TruSpace - Scanner2GO", YOUTUBE.COM, 10 November 2019 (2019-11-10), XP055813021, Retrieved from the Internet <URL:https://www.youtube.com/watch?v=s6QVHPSgSKk>
- "Leica CloudWorx 4.0 for MicroStation", 1 January 2010 (2010-01-01), pages 1 - 6, XP055118007, Retrieved from the Internet <URL:http://www.nsscanada.com/Images/Downloadable Papers/Brochure/Leica Cloudworx Software.pdf> [retrieved on 20140514]
- H STERNBERG ET AL: "TERRESTRIAL 3D LASER SCANNING - DATA ACQUISITION AND OBJECT MODELLING FOR INDUSTRIAL AS-BUILT DOCUMENTATION AND ARCHITECTURAL APPLICATIONS ISPRS ThS-17 Laser Scanning Acquisition and Modelling Techniques", PROCEEDINGS OF ISPRS XXXV CONGRESS, 1 January 2004 (2004-01-01), XP055118062, Retrieved from the Internet <URL:http://www.isprs.org/proceedings/XXXV/congress/comm5/papers/183.pdf> [retrieved on 20140514]
- ANONYMOUS: "Why Field of View important in First Person Shooters", 1 July 2014 (2014-07-01), XP055843416, Retrieved from the Internet <URL:https://pyroteq.com/field-of-view-first-person-shooters/> [retrieved on 20210921]
- GOOGLE EARTH: "Google Earth Studio - Camera Target & Multi-View", 8 March 2019 (2019-03-08), pages 1, XP054982262, Retrieved from the Internet <URL:https://www.youtube.com/watch?v=1qCu-uFDFvE> [retrieved on 20210921]

## Beschreibung

Die vorliegende Erfindung betrifft ein computer-implementiertes Verfahren und eine Vorrichtung zum präzisen Auswählen einer Raumkoordinate mittels eines digitalen Bildes.

Es ist bekannt, einen dreidimensionalen Raum, in dem sich Objekte befinden, im Folgenden auch als Objektraum bezeichnet, zu erfassen. Solche Objekträume können sich innerhalb von Gebäuden und im Außenbereich befinden. Zum Erfassen von Objekträumen sind verschiedene Erfassungssysteme bekannt.

Ein solches System ist beispielsweise in der EP 2 913 796 A1 beschrieben. In diesem Fall wird ein Laserscanner in Verbindung mit mehreren Kameras verwendet. Aus den Signalen des Laserscanners wird eine Punktwolke erzeugt, aus der ein dreidimensionales Gebäudemodell des Objektraum erstellt wird. Aus den Bildern der Kameras kann ein Panoramabild erzeugt werden, welches den Objektraum als digitales Bild zeigt.

Bei der Erfassung von Punktwolken mit Hilfe von Laserscannern kommen in der Regel Systeme zum Einsatz, bei denen ein Laserstrahl durch einen um eine Achse rotierenden Spiegel in einer Ebene im Raum ausgesandt wird. Alternativ können Festkörperlaser ohne bewegliche Teile eingesetzt werden, um einen rotierenden Laserstrahl zu erzeugen. Die hierbei gelieferten Daten enthalten für jeden Datensatz (Punkt der Punktwolke) in der Regel den jeweiligen Zeitstempel des jeweils ausgesandten Laserimpulses mit der zugehörigen Winkelstellung innerhalb der Rotationsachse. Ferner enthält jeder Datensatz einen oder mehrere Werte, die aus einem oder mehreren nacheinander empfangenen Reflexionssignalen abgeleitet werden und die aus der Laserlicht-Laufzeit berechnete Entfernung der jeweils reflektierenden Oberflächen in Richtung des Aussendestrahls sowie die zugehörigen Reflexionsintensitäten angeben. Aus den empfangenen Reflexionssignalen werden Entfernungen berechnet. Hieraus können zusammen mit den Intensitäten der Reflexionssignale dreidimensionale Punktkoordinaten berechnet werden, welche dann die Punkte der Punktwolke bilden. Um aus den Erfassungsvorgängen mittels des bewegten Laserscanners ein konsistentes dreidimensionales Modell aufbauen zu können, ist es notwendig, für jede Messung einen Zeitstempel sowie die exakte Positionenausrichtung des Laserscanners im Raum zu erfassen.

Verschiedene Laserscanner sind aus der DE 102011 121 115 B4 oder der DE 10 2004 050 682 A1 bekannt. Ferner ist aus der EP 2 388 615 A1 und der US 2017/0269215 A1 ein Mehrfachscanner bekannt, welcher Signalstrahlen fächerförmig emittiert und die Reflexionen dieser Signalstrahlen misst.

Das Video "09 - Leica CloudWorx TruSpace - Scanner2GO" von der Scanner2go GmbH auf YouTube.com, veröffentlicht am 10. November 2019, beschreibt ein Verfahren zur Visualisierung von 3D-Scandaten, bei dem der Benutzer einen Punkt in der 2D-Ansicht anklicken kann und das System den entsprechenden 3D-Punkt in der Punktwolke bestimmt. Die Bildinformationen von Panoramakameras bestehen aus Bilddateien, die mit einem Zeitstempel des Aufnahmezeitpunktes versehen sind. Ist zu jedem Zeitstempel und zu jeder Bilddatei die genaue Position und Ausrichtung der jeweiligen Kamera im Raum bekannt, kann ein digitales Panoramabild erzeugt werden. Ferner können unter Zuhilfenahme von bekannten oder durch Kalibrierung zu bestimmenden Kameraparametern, wie zum Beispiel Objektivbrennweite und Abbildungscharakteristik, sowie Sensorgröße und -auflösung, die Bilddaten und die Punktwolken-Daten einander zugeordnet werden. Auf diese Weise kann ein Objektraum dreidimensional erfasst werden.

Panoramabilder werden dabei dazu verwendet, einen sehr realitätsgetreuen virtuellen Rundgang durch den erfassten Objektraum zu ermöglichen. Hier stehen die Bilddateien im Vordergrund, die mittels sogenanntem *"Stitching"* unter Zuhilfenahme der 3D-Information (Position und Ausrichtung, d. h. der Pose, der jeweiligen Kamera im Raum) zu lückenlosen 360-Grad-Panoramen zusammengefügt werden können, die der genauen Ansicht an einem bestimmten Punkt der Umgebung entsprechen, wie sie ein Betrachter vor Ort wahrnehmen würde. Die Gesamtheit der Panoramabilder repräsentiert hierbei eine Vielzahl einzelner diskreter Positionen, an denen die zugrundeliegenden Bilder aufgenommen wurden. Der Betrachter kann lediglich von einer diskreten Position zu einer anderen diskreten Position springen und von Panoramabild zu Panoramabild wechseln, im Gegensatz zum oben angeführten Punktwolkenmodell, das kontinuierlich "durchflogen" werden kann und dessen Punkte Raumkoordinaten von Oberflächenelementen des erfassten Objektraums zugeordnet sind.

Um für Panoramabilder approximierte Tiefeninformationen zu gewinnen, sind sogenannte Time-of-Flight-Kameras bekannt, die einen Lichtblitz aussenden und für jedes Pixel des Kamerasensors den individuellen Zeitpunkt bestimmen, an dem das Reflexionssignal erfasst wird, so dass sich über die Lichtlaufzeit hieraus eine Entfernungsinformation für das betreffende Pixel ergibt. Aufgrund der geringen Auflösung und der begrenzten Reichweite und Präzision eignen sich diese Time-of-Flight-Kameras jedoch nicht für die detaillierte Erfassung großer Gebäude.

Gleiches gilt für Stereo-Tiefenkameras, die ähnlich dem menschlichen Auge aus der Parallaxeninformation zweier Kamerabilder Tiefeninformationen gewinnen. Auch hier ist die Präzision und Auflösung für Vermessungs-Anwendungen ungenügend.

Außerdem sind photogrammetrische Verfahren bekannt, bei denen aus einer Vielzahl von Bildern, die von ein und demselben Objekt oder derselben Umgebung aus verschiedenen Blickwinkeln aufgenommen wurden, ein texturiertes 3D-Modell erstellt werden kann, indem zum Beispiel das sogenannte *Bundle-Adjustment-Verfahren* zum Einsatz kommt, bei dem in einem Optimierungsprozess gleichzeitig die Positionen der Punkte im 3D-Raum, die Positionen und Orientierungen der beobachtenden Kameras sowie deren interne Kalibrierparameter an die Messbilder angepasst werden. Diese Verfahren liefern für gut texturierte Oberflächen gute Ergebnisse, scheitern aber bei gleichfarbigen, merkmalsarmen Oberflächen sowie bei komplizierteren Verschneidungen und spiegelnden Objekten. Auch hier ist die Präzision und Auflösung für Vermessungs-Anwendungen ungenügend.

Die beim Erfassen des Objektraums gewonnenen Daten können dazu genutzt werden, den dreidimensionalen Raum zu visualisieren. Derartige Visualisierungen können wiederum dafür genutzt werden, Objekte oder Gegenstände im Raum zu vermessen. Außerdem kann die Visualisierung für eine so genannte computer-gestützte Erweiterung der Realitätswahrnehmung (*Augmented Reality*) genutzt werden. Bei den verschiedenen Anwendungen ergibt sich das Bedürfnis, eine Raumkoordinate mittels eines digitalen Bildes präzise auszuwählen. Dabei ergibt sich das Problem, dass zwei sehr nah beieinander liegende Pixel des digitalen Bildes gegebenenfalls Raumkoordinaten zugeordnet sind, die einen sehr großen Abstand voneinander haben.

Der vorliegenden Erfindung liegt die Aufgabe zugrunde, ein computer-implementiertes Verfahren und eine Vorrichtung der eingangs genannten Art bereitzustellen, mit denen eine Raumkoordinate mittels eines digitalen Bildes präzise ausgewählt werden kann. Erfindungsgemäß wird diese Aufgabe durch ein Verfahren mit den Merkmalen des Anspruchs 1 und eine Vorrichtung mit den Merkmalen des Anspruchs 9 gelöst. Vorteilhafte Ausgestaltungen und Weiterbildungen ergeben sich aus den abhängigen Ansprüchen.

Bei dem erfindungsgemäßen Verfahren wird ein digitales Bild von Oberflächenelementen in einem dreidimensionalen Raum bereitgestellt. Des Weiteren wird eine Punktwolke bereitgestellt, wobei den Punkten, welche die Punktwolke bilden, Raumkoordinaten zugeordnet sind und den Punkten Oberflächenelemente in dem dreidimensionalen Raum zugeordnet sind. Die Oberflächenelemente werden im dreidimensionalen Raum durch eine erste Darstellung des digitalen Bildes visualisiert. Anschließend wird ein Pixel des digitalen Bildes markiert und es werden approximierte Raumkoordinaten zum markierten Pixel ermittelt, die dem durch das markierte Pixel visualisierten Oberflächenelement im dreidimensionalen Raum entsprechen. Des Weiteren wird bei dem erfindungsgemäßen Verfahren eine Ergänzungsansicht eingeblendet, welche die in einer begrenzten dreidimensionalen Umgebung der zum markierten Pixel ermittelten approximierten Raumkoordinaten liegenden Punkte der Punktwolke in einer zweiten Darstellung darstellt. Schließlich wird ein in der Ergänzungsansicht dargestellter Punkt der Punktwolke ausgewählt.

Unter einer Punktwolke wird im Sinne der Erfindung eine Menge von Punkten eines Vektorraums verstanden, die eine unorganisierte räumliche Struktur, das heißt eine Wolke, aufweist. Eine Punktwolke ist durch die enthaltenen Punkte beschrieben, die jeweils durch ihre Raumkoordinaten erfasst sind. Zu den Punkten können zusätzlich Attribute erfasst sein, wie zum Beispiel geometrische Normalen der zugehörigen Oberflächenelemente, Reflexionsintensitäten, Farbwerte und/oder Messgenauigkeiten. Wie einleitend beschrieben kann ein Punkt der Punktwolke beim Erfassen des dreidimensionalen Raums dadurch erzeugt werden, dass ein Abtaststrahl bei den Raumkoordinaten des Punktes durch ein Oberflächenelement abgelenkt, insbesondere reflektiert, wurde.

Die begrenzte dreidimensionale Umgebung ist insbesondere ein Volumen um die zum markierten Pixel ermittelten approximierten Raumkoordinaten, insbesondere ein würfelförmiges Volumen, welches die zum markierten Pixel ermittelten approximierten Raumkoordinaten enthält.

Nachdem ein in der Ergänzungsansicht dargestellter Punkt der Punktwolke ausgewählt worden ist, können bei dem erfindungsgemäßen Verfahren die Raumkoordinaten des ausgewählten Punktes der Punktwolke ermittelt werden.

Bei der Visualisierung der Punkte einer Punktwolke, die zum Beispiel auch über einen browserbasierte Plattform über das Internet erfolgen kann, ergibt sich das Problem, dass die erforderlichen Rechen- bzw. Datenübertraguungsressourcen sehr groß werden, sobald der visualisierte dreidimensionale Raum entsprechend umfangreich und detailreich ist und zum Beispiel das Innere eines Gebäudes mit verschiedenen Räumen und Stockwerken darstellt. Eine flüssige Veränderung der Visualisierung des dreidimensionalen Raums anhand der Darstellung von Punkten einer Punktwolke ist daher bei den derzeit üblichen Rechen- und Datenübertragungskapazitäten schwierig. Dieses Problem wird durch das erfindungsgemäße Verfahren gelöst. Vorteilhafterweise kombiniert das erfindungsgemäße Verfahren nämlich die Visualisierung des dreidimensionalen Raums durch ein digitales Bild mit den präzisen Informationen, welche durch eine Punktwolke des dreidimensionalen Raums bereitgestellt werden können. Dabei wird jedoch in der zweiten Darstellung der Punkte der Punktwolke nicht der gesamte visualisierte Raum wiedergegeben, sondern nur eine begrenzte dreidimensionale Umgebung zu einem Pixel, das in einen digitalem Bild markiert worden ist. Hierdurch wird der Rechenaufwand für die Visualisierung der Punktwolke signifikant so weit reduziert, dass eine flüssige Darstellung des dreidimensionalen Raums und die Auswahl einer Raumkoordinate darin möglich ist, wobei die Auswahl der Raumkoordinate anhand der in der zweiten Darstellung enthaltenen Punkte der Ergänzungsansicht erfolgen kann, so dass die Raumkoordinate sehr präzise ausgewählt werden kann.

Gemäß einer Ausgestaltung des erfindungsgemäßen Verfahrens visualisiert das digitale Bild die Oberflächenelemente des dreidimensionalen Raums durch eine zweidimensionale Projektion aus einer ersten Aufnahmepose bei einer ersten Aufnahmeposition mit einem ersten Öffnungswinkel einer ersten virtuellen oder realen Kamera in Richtung des aufgenommenen dreidimensionalen Raums. Das digitale Bild zeigt somit eine sehr realitätsnahe Visualisierung des erfassten dreidimensionalen Raums aus einer ersten Aufnahmepose. Da es sich jedoch um eine zweidimensionale Projektion des erfassten dreidimensionalen Raums handelt, visualisiert das digitale Bild allerdings keine Tiefeninformationen, zumindest keine exakten Tiefeninformationen. Das digitale Bild kann jedoch gemäß einer Weiterbildung dieser Ausgestaltung zu zweidimensionalen Pixeln ferner approximierte Tiefeninformationen enthalten. Die zu einem Pixel jeweils gehörende Tiefeninformation ist die Entfernung, die das durch das betreffende Pixel abgebildete Oberflächenelement des dreidimensionalen Raums zu einem festgelegten Punkt, zum Beispiel dem Augpunkt, oder einer festgelegten Ebene, zum Beispiel der Bildebene, der virtuellen oder realen Kamera hat. Auf diese Weise lassen sich die approximierten Raumkoordinaten zu einem markierten Pixel aus dem digitalen Bild direkt gewinnen. Es ist jedoch zu beachten, dass die in einem digitalen Bild enthaltenen Tiefeninformationen für viele Anwendungen, insbesondere Vermessungsanwendungen, zu ungenau sind.

Gemäß einer weiteren Ausgestaltung des erfindungsgemäßen Verfahrens ist der zweiten Darstellung der Ergänzungsansicht eine zweite Aufnahmepose bei einer zweiten Aufnahmeposition und ein zweiter Öffnungswinkel einer zweiten virtuellen Kamera zugeordnet, welche die Perspektive der Darstellung der begrenzten dreidimensionalen Umgebung bestimmt. Die Ergänzungsansicht gibt die dreidimensionale Umgebung des durch das markierte Pixel visualisierten Oberflächenelements aus einer anderen Aufnahmepose wieder, wobei anstatt eines realitätsnahen digitalen Bildes die Punkte der Punktwolke diese dreidimensionale Umgebung visualisieren.

Der Darstellungsmaßstab der zweiten Darstellung der Ergänzungsansicht ist größer als der Darstellungsmaßstab der ersten Darstellung des digitalen Bildes. Die Ergänzungsansicht ist somit insbesondere eine Lupenansicht, bei der ein bestimmter Bereich des digitalen Bildes vergrößert dargestellt wird. Die Besonderheit der vergrößerten Ansicht liegt jedoch darin, dass nicht Pixel des digitalen Bildes dargestellt werden, sondern Punkte einer Punktwolke, welche exakte Raumkoordinaten von Oberflächenelementen des erfassten dreidimensionalen Raums umfassen.

Um in der Ergänzungsansicht einen größeren Darstellungsmaßstab zu gewinnen, liegt insbesondere die zweite Aufnahmeposition näher an den zum markierten Pixel ermittelten approximierten Raumkoordinaten als die erste Aufnahmeposition. Die zweite Aufnahmeposition befindet sich insbesondere auf einer Geraden, die durch die erste Aufnahmeposition und die zum markierten Pixel ermittelten approximierten Raumkoordinaten geht, und zwar zwischen der ersten Aufnahmeposition und den zum markierten Pixel ermittelten approximierten Raumkoordinaten. Der in der ersten und der zweiten Darstellung visualisierte Blickwinkel ist somit derselbe. Die zweite Aufnahmeposition ist nur näher an den zum markierten Pixel ermittelten approximierten Raumkoordinaten als die erste Aufnahmeposition.

Gemäß einer Weiterbildung des erfindungsgemäßen Verfahrens wird in der zweiten Darstellung der Ergänzungsansicht oder einer ersten zusätzlichen Darstellung die zweite Aufnahmepose der zweiten virtuellen Kamera in Abhängigkeit von der Normalen des durch das markierte Pixel visualisierten Oberflächenelements im dreidimensionalen Raum oder in Abhängigkeit von den Normalen der Oberflächenelemente in der Umgebung der zum markierten Pixel ermittelten approximierten Raumkoordinaten berechnet. In diesem Fall ist somit die Perspektive der Visualisierung bei der zweiten Darstellung anders als bei der ersten Darstellung. Sie hängt von der Normalen des durch das markierte Pixel visualisierten Oberflächenelements ab. Man erreicht in der zweiten Darstellung der Punkte der Punktwolke auf diese Weise eine besonders genaue Ansicht der Umgebung des durch das markierte Pixel visualisierten Oberflächenelements. Durch die automatisch erfolgende leichte Änderung der Darstellungsperspektive beim Bewegen des Mauszeigers über benachbarte Pixel wird ferner ein für die menschliche Raumwahrnehmung des dargestellten Punktwolkenausschnitts vorteilhafter Bewegungsparallaxen-Effekt erzielt, ohne dass hierfür zusätzliche Bedienvorgänge beispielweise über die Tastatur zur manuellen Steuerung der leichten Perspektivenwechsel nötig sind.

Der Abstand der zum markierten Pixel ermittelten approximierten Raumkoordinaten von der ersten und/oder der zweiten Aufnahmeposition (d.h. dem zugehörigen Augpunkt oder alternativ der zugehörigen Bildebene) kann in der ersten Darstellung und/oder in der zweiten Darstellung angezeigt werden.

Gemäß einer weiteren Ausgestaltung des erfindungsgemäßen Verfahrens wird der Abstand der zweiten Aufnahmeposition von den zum markierten Pixel ermittelten approximierten Raumkoordinaten dynamisch an die in der begrenzten dreidimensionalen Umgebung enthaltenen Oberflächenelemente angepasst. Werden beispielsweise in der dreidimensionalen Umgebung besonders fein strukturierte Oberflächenelemente dargestellt, kann der Abstand der zweiten Aufnahmeposition an die von den zum markierten Pixel ermittelten Raumkoordinaten angenähert werden, um eine detailliertere Ansicht bei der Darstellung der Punkte der Punktwolke zu erhalten. Durch das hierbei automatisch erfolgende Heranbewegen und Herausbewegen der Darstellungsperspektive beim Bewegen des Mauszeigers über benachbarte Pixeln wird hier ebenfalls ein für die menschliche Raumwahrnehmung des dargestellten Punktwolkenausschnitts vorteilhafter Bewegungsparallaxen-Effekt erzielt, ohne dass weitere Bedienvorgänge beispielsweise über die Tastatur zur manuellen Verschiebung der Darstellungsperspektive nötig sind.

Alternativ kann der Abstand der zweiten Aufnahmeposition von den zum markierten Pixel ermittelten approximierten Raumkoordinaten auch fest vorgegeben sein. In diesem Fall kann sich der Betrachter leichter in der zweiten Darstellung anhand der Punkte der Punktwolke orientieren. Auch hierbei bewegt sich die Perspektive in der zweiten Darstellung automatisch leicht heran und heraus, wenn der Mauszeigers über benachbarte Pixeln bewegt wird, wodurch sich wieder ein für die menschliche Raumwahrnehmung des dargestellten Punktwolkenausschnitts vorteilhafter Bewegungsparallaxen-Effekt ergibt, ohne dass weitere Bedienvorgänge beispielsweise über die Tastatur zur manuellen Verschiebung der Darstellungsperspektive nötig sind.

Gemäß einer weiteren Ausgestaltung des erfindungsgemäßen Verfahrens umfasst die begrenzte dreidimensionale Umgebung der zum markierten Pixel ermittelten Raumkoordinaten nur Punkte, deren Raumkoordinaten einen Abstand von der ersten und/oder der zweiten Aufnahmeposition haben, der geringer als ein Grenzabstand ist. Insbesondere werden solche Punkte der Punktwolke nicht dargestellt, deren Raumkoordinaten zu weit von der ersten oder zweiten Aufnahmeposition entfernt sind. Befindet sich somit auf dem zweidimensionalen Bild ein Pixel in unmittelbarer Nachbarschaft des markierten Pixels, und unterscheiden sich die zu diesem Pixel ermittelten approximierten Raumkoordinaten von den zum markierten Pixel ermittelten approximierten Raumkoordinaten jedoch derart, dass die Raumkoordinaten dieses Pixels bezüglich der ersten Aufnahmeposition weit hinter den Raumkoordinaten des markierten Pixels liegen, so liegen die Raumkoordinaten dieses Pixels außerhalb der begrenzten dreidimensionalen Umgebung. Bei der zweiten Darstellung der dreidimensionalen Umgebung kann dieser Bereich beispielsweise leer, das heißt schwarz oder weiß dargestellt werden. Für diesen weiter hinten liegenden Bereich werden keine Punkte der Punktwolke dargestellt. Auf diese Weise vermeidet man, dass irrtümlich ein räumlich weit entfernter Punkt ausgewählt wird, dessen zugehöriges Pixel in dem digitalen Bild jedoch unmittelbar benachbart zu dem markierten Pixel ist. Falls der Grenzabstand zur zweiten Aufnahmeposition als dynamisches Auswahlkriterium wird, erfolgt hierdurch beim Bewegen des Mauszeigers über benachbarte Pixel automatisch eine Selektion von Teilausschnitten der Punktwolke, die einem automatischen Verschieben der Clippingebene entspricht. Hierdurch hebt sich vorteilhafterweise der Vordergrund automatisch dynamisch vom Hintergrund ab, ohne dass weitere Bedienvorgänge beispielsweise über die Tastatur zur manuellen Verschiebung der Clippingebenen nötig sind.

Alternativ zum kompletten Ausblenden von Punkten der Punktwolken jenseits von Grenzabständen kann in der zweiten Darstellung der Ergänzungsansicht die Farbdarstellung der Punkte auch in Abhängigkeit von der Entfernung von der ersten oder zweiten Aufnahmeposition variiert werden. Beispielweise können nähergelegene Punkte heller und weiter entfernte Punkte dunkler dargestellt werden, wobei zum Beispiel entweder der erfasste reale Farbwert des entsprechenden Oberflächenelements in der Helligkeit angepasst wird oder eine Depth-Map-Darstellung in Falschfarben erfolgen kann, bei der nähegelegene Punkte in Graustufen heller und enfternte Punkte dunkler angezeigt werden oder umgekehrt. Erfolgt diese Farbdarstellung in Abhängigkeit von der zweiten Aufnahmeposition, ergibt sich auch hierbei, wenn der Mauszeiger über benachbarte Pixel geführt wird, eine automatische dynamische Anpassung der virtuellen Beleuchtung und ein dynamisches Shading, das der verbesserten menschlichen Raumwahrnehmung dient. Der erzielte Effekt ist ähnlich zur Beleuchtung von Teilen eines größeren Objektes mit einer dynamischen Lichtquelle, die näher an Teile des Objektes herangeführt oder von diesem weggeführt wird. Auch hier ist vorteilhafterweise kein manueller weiterer Bedienvorgang zur Veränderung von virtuellen Beleuchtungsparametern nötig.

In einer weiteren vorteilhaften Ausgestaltung wird für die zweite Darstellung der Ergänzungsansicht ein bekanntes Rendering- oder Shading-Verfahren der Computergrafik angewendet und Parameter dieses Verfahrens, beispielsweise die Position einer virtuellen Lichtquelle, in Abhängigkeit von der Normalen des durch das markierte Pixel visualisierten Oberflächenelements im dreidimensionalen Raum oder in Abhängigkeit von den Normalen der Oberflächenelemente in der Umgebung der zum markierten Pixel ermittelten approximierten Raumkoordinaten verändert. Auch hierbei ergibt sich somit, wenn der Mauszeiger über benachbarte Pixel geführt wird, eine automatische dynamische Anpassung beispielsweise der virtuellen Beleuchtung und damit ein dynamisches Shading, das der verbesserten menschlichen Raumwahrnehmung dient, wobei vorteilhafterweise kein manueller weiterer Bedienvorgang zur Veränderung der vorgenannten Rendering- und Shading-Parameter nötig ist.

Der Grenzabstand kann dabei von dem Abstand der zum markierten Pixel ermittelten approximierten Raumkoordinaten zu der ersten Aufnahmeposition abhängen. Ist dieser Abstand größer, kann auch der Grenzabstand größer gewählt werden. Ist umgekehrt dieser Abstand kleiner, kann auch der Grenzabstand kleiner gewählt werden.

Gemäß einer weiteren Ausgestaltung des erfindungsgemäßen Verfahrens wird das markierte Pixel hervorgehoben dargestellt. Ferner kann die Normale und/oder es können die Flächentangenten des durch das markierte Pixel visualisierten Oberflächenelements in der ersten und/oder zweiten Darstellung angezeigt werden. Auf diese Weise lässt sich schnell erkennen, welcher Pixel derzeit markiert ist und wie die Geometrie des zugehörigen Oberflächenelements ist.

Gemäß einer weiteren Ausgestaltung des erfindungsgemäßen Verfahrens wird eine zweite zusätzliche Darstellung der Oberflächenelemente oder der Punkte der Punktwolke in dem dreidimensionalen Raum erzeugt und angezeigt, wobei die zweite zusätzliche Darstellung den dreidimensionalen Raum aus einer anderen Perspektive als die erste Darstellung des digitalen Bildes zeigt. Gemäß einer Weiterbildung werden in der zweiten zusätzlichen Darstellung ein erster Indikator für die erste Aufnahmeposition und/oder ein zweiter Indikator für die Aufnahmerichtung und/oder den Öffnungswinkel der ersten virtuellen oder realen Kamera und/oder ein dritter Indikator für die approximierten Raumkoordinaten des markierten Pixels angezeigt.

Die zweite zusätzliche Darstellung wird insbesondere neben der ersten Darstellung wiedergegeben. In der zweiten zusätzlichen Darstellung kann insbesondere sehr einfach erkannt werden, ob man das Pixel in der ersten Darstellung markiert hat, das dem gewünschten Oberflächenelement zugeordnet ist, oder ob man sich gegebenenfalls auf einem Pixel befindet, das einem weit dahinterliegenden Oberflächenelement zugeordnet ist, das jedoch benachbart zu dem markierten Pixel ist. Dies wird durch die andere Perspektive der ersten zusätzlichen Darstellung sichtbar. Außerdem ist durch die Indikatoren unmittelbar sichtbar, wie das digitale Bild der ersten Darstellung aufgenommen wurde. Die zweite ergänzende Darstellung ist insbesondere eine Ansicht von oben. Alternativ kann es auch eine Ansicht von unten oder von der Seite sein. Durch die unterschiedliche Perspektive zu der ersten Darstellung kann der Betrachter sich in der ersten Darstellung leichter orientieren, da er leichter erkennen kann, wie die Tiefeninformation des digitalen Bildes ist. Auch anhand der zweiten ergänzenden Darstellung lässt sich jedoch eine bestimmte Raumkoordinate nicht präzise auswählen, da in dieser Übersichtsdarstellung nicht die Punkte der Punktwolke direkt dargestellt werden.

Gemäß einer weiteren Ausgestaltung des erfindungsgemäßen Verfahrens werden in der ersten und/oder zweiten Darstellung das digitale Bild und/oder die Punkte der Punktwolke in Falschfarben dargestellt. Die Falschfarben können sich beispielsweise aus der bei der Erfassung der Daten für die Punktwolke mithilfe eines Laserscanners festgestellten Reflexionsintensität und/oder der Richtung ableiten, aus der der betreffende Punkt gescannt wurde.

Des Weiteren können bei dem erfindungsgemäßen Verfahren in der zweiten Darstellung der Ergänzungsansicht gespeicherte Anmerkungen angezeigt werden, die mit bestimmten Raumpositionen verknüpft wurden, wobei diese nur in Abhängigkeit vom Ausschnitt der dargestellten begrenzten dreidimensionalen Umgebung angezeigt werden.

Des Weiteren kann die zweite Darstellung eine stereoskopische oder autostereoskopische Darstellung der begrenzten dreidimensionalen Umgebung sein.

Das digitale Bild kann bei dem erfindungsgemäßen Verfahren auch eine Kartenansicht oder eine Zeichnung sein. Die Ergänzungsansicht offenbart in diesem Fall Details, welche in der Kartenansicht nicht sichtbar sind.

Gemäß einer Ausgestaltung des erfindungsgemäßen Verfahrens ist das digitale Bild ein aus einer Vielzahl von digitalen Einzelbildern zusammengesetztes Panoramabild. Die erste Aufnahmepose ist in diesem Fall gegebenenfalls eine virtuelle Aufnahmepose, da die Einzelbilder des Panoramabilds gegebenenfalls aus verschiedenen Aufnahmeposen aufgenommen wurden. Ferner kann eine Vielzahl von Panoramabildern bereitgestellt werden, so dass die erste Darstellung von einem Panoramabild zu einem anderen Panoramablick springen kann.

Des Weiteren kann das digitale Bild ein virtuelles Computer-generiertes Bild sein, das aus dreidimensionalen Daten oder Punktwolkendaten gerendert wurde.

Die Punktwolke wird bei dem erfindungsgemäßen Verfahren insbesondere mittels eines Laserscanners erzeugt. Gemäß einer Ausgestaltung des erfindungsgemäßen Verfahrens sind einem Punkt der Punktwolke Raumkoordinaten zugeordnet, bei denen sich ein Oberflächenelement befindet, welches einen Laserstrahl des Laserscanners beim Erfassen des dreidimensionalen Raums abgelenkt hat.

Gemäß einer Weiterbildung des erfindungsgemäßen Verfahrens sind einer Teilmenge der Oberflächenelemente, die bei der ersten Darstellung des digitalen Bildes visualisiert werden, keine Punkte der Punktwolke zugeordnet, so dass die Punktwolke weniger Oberflächenelemente darstellt als das digitale Bild. Die Punktwolke wurde insbesondere zu einem früheren Zeitpunkt erfasst als das digitale Bild, so dass bestimmte Oberflächen, beispielsweise von Wänden oder Decken, bei der Konstruktion eines Gebäudes, welches erfasst worden ist, noch nicht vorhanden waren. Man kann bei der Darstellung der Punktwolke somit durch Oberflächen des digitalen Bildes hindurch sehen, da bestimmte Oberflächenelemente nicht den Blick auf dahinterliegende Oberflächenelemente abschatten.

Gemäß einer weiteren Ausgestaltung des erfindungsgemäßen Verfahrens umfasst die zweite Darstellung in der Ergänzungsansicht eine Schnittansicht. Die Schnittansicht kann an die dargestellte Umgebung angepasst werden, um beispielsweise Punkte auf dem Boden zu entfernen.

Des Weiteren können in der zweiten Darstellung der Ergänzungsansicht Oberflächenelemente, denen definierte Klassifikationsattribute zugeordnet sind, nicht oder anders dargestellt werden. Beispielsweise können Oberflächen nicht dargestellt werden, die als bewegliche Objekte klassifiziert sind.

Außerdem kann in der zweiten Darstellung der Ergänzungsansicht ein Klassifikationsattribut zumindest eines Oberflächenelements, zu dem Punkte der Punktwolke in der zweiten Darstellung dargestellt werden, angezeigt werden. Beispielsweise kann angezeigt werden, welche Oberflächenelemente zu einem bestimmten Rohr oder einem anderen Strukturelement gehören.

Des Weiteren kann die Punktwolke in der begrenzten dreidimensionalen Umgebung in zumindest einer Ebene segmentiert werden. Die Punkte der Ebene werden dann in der zweiten Darstellung dargestellt.

Außerdem können in der zweiten Darstellung in der Ergänzungsansicht, außer dem markierten Pixel, die Pixel mit einer niedrigeren Helligkeit als in der ersten Darstellung des digitalen Bildes gerendert werden.

Für die zweite Darstellung in der Ergänzungsansicht können zumindest zwei Modi definiert sein. Während der Darstellung der Punkte der Punktwolke in der zweiten Darstellung wird dann mittels eines Bedienvorgangs zwischen den verschiedenen Modi gewechselt. Beispielsweise wird die Darstellung der Punkte der Punktwolke geändert, sie können beispielsweise feiner oder dicker dargestellt werden. Bei einer dickeren Darstellung der Punkte nähert sich die zweite Darstellung der ersten Darstellung an.

Für die zweite Darstellung in der Ergänzungsansicht kann außerdem mittels eines Bedienvorgangs eine Rotation der Punktwolke durchführbar sein, so dass die Punkte der Punktwolke bei gedrehten Positionen dargestellt werden.

Außerdem kann für die zweite Darstellung in der Ergänzungsansicht mittels eines Bedienvorgangs eine Änderung der Aufnahmepose und/oder des Öffnungswinkels der zweiten virtuellen Kamera durchführbar sein, so dass die Punkte der Punktwolke aus einer anderen Perspektive dargestellt werden.

Gemäß einer weiteren Ausgestaltung des erfindungsgemäßen Verfahrens können zusätzlich zu der zweiten Darstellung in der Ergänzungsansicht dritte oder weitere zusätzliche Darstellungen in der Ergänzungsansicht mit jeweils geänderten ersten und/oder zweiten Aufnahmeposen und/oder Öffnungswinkeln der jeweiligen virtuellen Kameras einblendbar sein, so dass die Punkte der Punktwolke gleichzeitig aus einer oder mehreren anderen Perspektiven dargestellt werden. Anstelle von oder zusätzlich zu den geänderten Perspektiven können in den dritten oder weiteren zusätzlichen Darstellungen auch die Darstellungsarten variiert werden, beispielweise hinsichtlich Farbdarstellung, Punktgröße oder virtuellen Beleuchtungsparametern wie vorgenannt beschrieben.

Des Weiteren kann bei dem erfindungsgemäßen Verfahren der Abstand der zum markierten Pixel ermittelten approximierten Raumkoordinaten vom ausgewählten Punkt der Punktwolke berechnet und angezeigt werden.

Gemäß einer Ausgestaltung des erfindungsgemäßen Verfahrens wird ein Pixel des digitalen Bildes dadurch markiert, dass mittels eines Eingabegeräts, zum Beispiel einer elektronischen Maus, ein Zeiger über die erste Darstellung des digitalen Bildes bewegt wird. In der Ergänzungsansicht wird dann als zweite Darstellung jeweils die dreidimensionale Umgebung der zu demjenigen Pixel ermittelten approximierten Raumkoordinaten dargestellt, bei welchem sich der Zeiger des Eingabegeräts befindet. Die zweite Aufnahmeposition und/oder Aufnahmepose wird somit verändert, wenn das markierte Pixel verändert wird. Wenn der Zeiger über die Darstellung des digitalen Bildes bewegt wird, wird somit fortwährend die zweite Aufnahmeposition und/oder Aufnahmepose in der Darstellung an das jeweils markierte Pixel angepasst. Dies ist auch im Hinblick auf begrenzte Rechen- oder Datenübertragungskapazitäten möglich, da nur die begrenzte dreidimensionale Umgebung in der zweiten Darstellung dargestellt wird.

Alternativ kann bei dem erfindungsgemäßen Verfahren automatisch oder durch einen Bedienvorgang auch die zweite Aufnahmepose unverändert bleiben, und zwar auch dann, wenn sich die zum markierten Pixel ermittelten approximierten Raumkoordinaten ändern, so dass Messungen und/oder Auswahl- oder Bedienvorgänge betreffend einzelne Punkte der Punktwolke innerhalb der in der Ergänzungsansicht dargestellten dreidimensionalen Umgebung ausgeführt werden können.

Gemäß einer weiteren Ausgestaltung des erfindungsgemäßen Verfahrens werden mit der ersten Darstellung des digitalen Bildes Kanten repräsentierende Pixel ermittelt. Wenn der Zeiger des Eingabegeräts von einem Pixel, welches eine Kante darstellt, zu einem Pixel bewegt wird, welches nicht zu dieser Kante gehört, wird in der Ergänzungsansicht zunächst auch dann die zweite Darstellung für das Pixel dargestellt, welches eine Kante darstellt, wenn der Zeiger des Eingabegeräts sich bereits bei dem Pixel befindet, welches nicht zu der Kante gehört. Vorteilhafterweise kann hierdurch ein unstetiger Wechsel der zweiten Aufnahmepose bei einer kleinen Bewegung des Zeigers verhindert werden. Die Ergänzungsansicht springt bzw. "schnappt" erst dann zu dem Pixel, welches nicht zu der Kante gehört, wenn der Zeiger des Eingabegeräts einen bestimmten Abstand von dem Pixel entfernt ist, welches die Kante darstellt, oder sobald nach Erreichen des Kanten-Pixels eine eine bestimmte Anzahl an weiteren Bewegungsereignissen aufgetreten oder ein bestimmtes Zeitintervall verstrichen ist. Wenn der Zeiger von einem Pixel, welches eine Kante darstellt, zu einem Pixel, welches nicht zu der Kante gehört, und danach wieder zu einem Pixel, welches zu der Kante gehört, bewegt wird, wird in der Ergänzungsansicht durchgehend die dreidimensionale Umgebung der Kante dargestellt. Die Darstellung "rastet" also innerhalb gewisser Zeigerbewegungsgrenzen an der Kante ein. Es erfolgt kein Sprung zu einem gegebenenfalls weit dahinterliegenden dreidimensionalen Bereich des von dem digitalen Bild dargestellten Raums.

Die vorliegende Erfindung betrifft des Weiteren ein computer-implementiertes Messverfahren zum Ermitteln des Abstands zweier Punkte im dreidimensionalen Raum. Bei diesem Verfahren wird mittels des vorstehend beschriebenen Verfahrens ein in der Ergänzungsansicht dargestellter erster Punkt der Punktwolke ausgewählt. Hierzu werden erste Raumkoordinaten des ersten Punktes ermittelt. Mittels des vorstehend beschriebenen Verfahrens wird ferner ein in der Ergänzungsansicht dargestellter zweiter Punkt der Punktwolke ausgewählt. Auch zu diesem zweiten Punkt werden zweite Raumkoordinaten ermittelt. Aus den ersten und zweiten Raumkoordinaten wird anschließend der räumliche Abstand des ersten Punktes von dem zweiten Punkt berechnet.

Mittels dieses Verfahrens kann der Abstand zweier Punkte im dreidimensionalen Raum sehr präzise anhand von Daten ermittelt werden, welche zuvor von dem dreidimensionalen Raum erfasst wurden. Diese Daten umfassen ein digitales Bild des Raums sowie eine Punktwolke.

Die vorliegende Erfindung betrifft des Weiteren ein computer-implementiertes Verfahren zum Ausschneiden von einem Oberflächensegment, das in einem digitalen Bild dargestellt ist. Dabei wird mittels des vorstehend beschriebenen Verfahrens eine Vielzahl von in der Ergänzungsansicht dargestellten Punkten der Punktwolke ausgewählt und mittels der ausgewählten Punkte wird ein Oberflächensegment in dem digitalen Bild abgegrenzt und ausgeschnitten. Vorteilhaft an diesem Verfahren ist, dass beim Ausschneiden des Oberflächensegments nicht die gegebenenfalls ungenauen Daten des digitalen Bildes verwendet werden, sondern die Punkte der Punktwolke, welche exakte Messwerte beim Erfassen des dreidimensionalen Raums darstellen. Ungenauigkeiten durch Artefakte, die gegebenenfalls beim Erzeugen des digitalen Bildes auftreten, beeinflussen den Vorgangs des Ausschneidens des Oberflächensegments daher nicht nachteilig.

Schließlich betrifft die Erfindung eine Vorrichtung zum präzisen Auswählen einer Raumkoordinate mittels eines digitalen Bildes. Die Vorrichtung weist einen Speicher auf, in dem Daten zu zumindest einem digitalen Bild von Oberflächenelementen in einem dreidimensionalen Raum und zu einer Punktwolke gespeichert sind, wobei den Punkten, welche die Punktwolke bilden, Raumkoordinaten zugeordnet sind und den Punkten Oberflächenelemente in dem dreidimensionalen Raum zugeordnet sind. Ferner umfasst die Vorrichtung eine Visualisierungseinrichtung, die datentechnisch mit dem Speicher gekoppelt ist und die eingerichtet ist, die Oberflächenelemente im dreidimensionalen Raum durch eine erste Darstellung des digitalen Bildes zu visualisieren. Des Weiteren umfasst die Vorrichtung ein Eingabegerät zum Markieren eines Pixels des digitalen Bildes mittels eines Zeigers. Schließlich weist die Vorrichtung eine Recheneinheit auf, die eingerichtet ist, approximierte Raumkoordinaten zum markierten Pixel zu ermitteln, die dem durch das markierte Pixel visualisierten Oberflächenelement im dreidimensionalen Raum entsprechen. Die Visualisierungseinrichtung ist dabei ferner eingerichtet, eine Ergänzungsansicht zu erzeugen und einzublenden, welche die in einer begrenzten dreidimensionalen Umgebung der zum markierten Pixel ermittelten approximierten Raumkoordinaten liegenden Punkte der Punktwolke in einer zweiten Darstellung darstellt. Ferner ist mittels des Eingabegeräts ein in der Ergänzungsansicht dargestellter Punkt der Punktwolke auswählbar.

Die erfindungsgemäße Vorrichtung ist insbesondere dazu ausgebildet, die vorstehend beschriebenen Verfahren auszuführen. Sie weist somit auch dieselben Vorteile wie diese Verfahren auf.

Die Vorrichtung ist insbesondere eine Vorrichtung zur Datenverarbeitung, insbesondere ein Computer, umfassend Mittel zur Ausführung eines der vorgenannten Verfahren.

Die Erfindung betrifft außerdem ein Computerprogrammprodukt, umfassend Befehle, die bei der Ausführung des Programms durch einen Computer diesen veranlassen, eines der vorgenannten Verfahren auszuführen.

Des Weiteren betrifft die Erfindung ein Computer-lesbares Speichermedium, umfassend Befehle, die bei der Ausführung durch einen Computer diesen veranlassen, eines der vorstehend genannten Verfahren auszuführen.

Im Folgenden wird die Erfindung anhand eines Ausführungsbeispiels mit Bezug zu den Zeichnungen erläutert.
- Fig. 1: zeigt ein Ausführungsbeispiel der erfindungsgemäßen Vorrichtung,
- Fig. 2: veranschaulicht das Erfassen und Darstellen von Oberflächenelementen in einem dreidimensionalen Raum gemäß einem Ausführungsbeispiel des erfindungsgemäßen Verfahrens,
- Fig. 3: zeigt eine von dem Ausführungsbeispiel des erfindungsgemäßen Verfahrens erzeugte Anzeige,
- Fig. 4: zeigt eine weitere von dem Ausführungsbeispiel des erfindungsgemäßen Verfahrens erzeugte Anzeige,
- Fig. 5: zeigt eine noch weitere von dem erfindungsgemäßen Verfahren erzeugte Anzeige,
- Fig. 6: zeigt eine zu der Anzeige der Figur 5 alternative Anzeige,
- Fig. 7: zeigt eine noch weitere von dem erfindungsgemäßen Verfahren erzeugte Anzeige,
- Fig. 8: zeigt eine zu der Anzeige der Figur 7 alternative Anzeige,
- Fig. 9: zeigt eine noch weitere von dem erfindungsgemäßen Verfahren erzeugte Anzeige,
- Fig. 10: zeigt eine zu der Anzeige der Figur 9 alternative Anzeige,
- Fig. 11: zeigt eine noch weitere von dem erfindungsgemäßen Verfahren erzeugte Anzeige und
- Fig. 12: zeigt eine zu der Anzeige der Figur 11 alternative Anzeige.

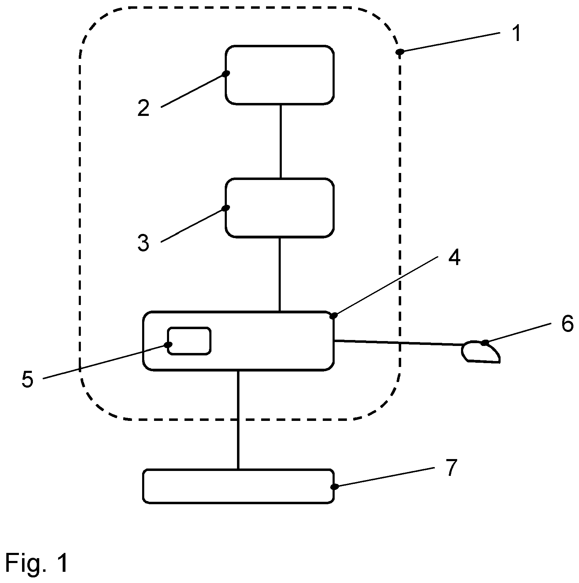

Ein Ausführungsbeispiel der erfindungsgemäßen Vorrichtung zum präzisen Auswählen einer Raumkoordinate mittels eines digitalen Bildes wird zunächst mit Bezug zu Figur 1 beschrieben:

Die Vorrichtung umfasst eine Datenverarbeitungseinrichtung 1, zum Beispiel einen Computer, der einen Speicher 2, eine Visualisierungseinrichtung 3 und eine Steuereinrichtung 4 mit einer Recheneinheit 5 aufweist. In dem Speicher 2 sind Daten zu zumindest einem digitalen Bild von Oberflächenelementen in einem dreidimensionalen Raum gespeichert. Im Ausführungsbeispiel ist eine Vielzahl von digitalen Bildern in dem Speicher 2 gespeichert, bei denen es sich jeweils um ein aus einer Vielzahl von digitalen Einzelbildern zusammengesetztes Panoramabild handelt. Die digitalen Einzelbilder wurden aus verschiedenen Aufnahmeposen in den dreidimensionalen Raum aufgenommen und anschließend zu dem Panoramabild zusammengesetzt. Bei den Einzelbildern handelt es sich um digitale Fotos.

Das digitale Bild setzt sich aus zweidimensionalen Pixel zusammen. Ferner ist in dem Speicher 2 zu jedem dieser Pixel eine approximierte Tiefeninformation gespeichert. Die Tiefeninformation ist dabei die Entfernung, die das durch das betreffende Pixel abgebildete Oberflächenelement des dreidimensionalen Raums zu einem festgelegten Punkt oder einer festgelegten Ebene einer virtuellen oder realen Kamera hat.

Bei alternativen Ausführungsbeispielen kann das digitale Bild auch eine Kartenansicht oder eine Zeichnung sein. Es kann sich auch um ein virtuelles Computer-generiertes Bild handeln, das auf beliebige Weise erzeugt worden ist.

Des Weiteren sind in dem Speicher 2 Daten zu einer Punktwolke gespeichert. Diese Daten wurden mittels eines Laserscanners erzeugt. Dabei wird ein Laserstrahl des Laserscanners an einem Oberflächenelement im dreidimensionalen Raum reflektiert und der reflektierte Strahl wird von einem Detektor erfasst. Auf diese Weise kann ein zu dem Oberflächenelement gehöriger Punkt erzeugt werden, dem Raumkoordinaten zugeordnet sind und der dem Oberflächenelement in dem dreidimensionalen Raum zugeordnet ist. Eine Vielzahl solcher Punkte, denen jeweils unterschiedliche Raumkoordinaten und unterschiedliche Oberflächenelemente zugeordnet sind, bilden die Punktwolke, die in dem Speicher 2 gespeichert ist. Ein Punkt der Punktwolke repräsentiert somit einen Messwert des Laserscanners. Dieser Messwert kann zumindest die exakten Raumkoordinaten eines dem Punkt zugeordneten Oberflächenelements umfassen.

Der Speicher 2 ist datentechnisch mit der Visualisierungseinrichtung 3 gekoppelt. Die Visualisierungseinrichtung 3 ist eingerichtet, die Oberflächenelemente im dreidimensionalen Raum durch eine erste Darstellung des digitalen Bildes zu visualisieren, wie es später mit Bezug zu dem Ausführungsbeispiel des erfindungsgemäßen Verfahrens erläutert wird. Die erste Darstellung ist eine realitätsnahe Darstellung des erfassten dreidimensionalen Raums. Sie ist ein Foto oder ähnelt zumindest einer fotographischen Darstellung, wenn es sich um ein Panoramabild handelt.

Des Weiteren ist die Visualisierungseinrichtung 3 eingerichtet, eine Ergänzungsansicht zu erzeugen und einzublenden, wie es auch später mit Bezug zu dem Ausführungsbeispiel des erfindungsgemäßen Verfahrens erläutert wird. In der Ergänzungsansicht werden Punkte der Punktwolke in einer zweiten Darstellung dargestellt. Es handelt sich um eine Visualisierung der Punktwolke in einem begrenzten Raumbereich.

Die Visualisierungseinrichtung 3 ist mit der Steuereinrichtung 4 gekoppelt. Die Steuereinrichtung 4 ist wiederum mit einem Eingabegerät 6 sowie einer Anzeigeeinrichtung 7 gekoppelt. Bei dem Eingabegerät 6 kann es sich beispielsweise um eine elektronische Maus handeln.

Die Steuereinrichtung 4 steuert die Anzeigeeinrichtung 7 so an, dass die von der Visualisierungseinrichtung 3 erzeugten Darstellungen auf der Anzeigeeinrichtung 7 angezeigt werden. Mit dem Eingabegerät 6 kann mittels eines in der Anzeige der Anzeigeeinrichtung 7 angezeigten Zeigers ein Pixel markiert und ausgewählt werden. Diese mittels des Eingabegeräts 6 ausgeführten Bedienvorgänge werden von der Steuereinrichtung 4 erfasst, welche in Abhängigkeit von den Eingaben Steuersignale erzeugen kann, welche unter anderem die Anzeige auf der Anzeigeeinrichtung 7 verändern können. Des Weiteren können auf Bedienvorgänge hin Steuersignale an die Visualisierungseinrichtung 3 übertragen werden, welche daraufhin geänderte Darstellungen für die Anzeige auf der Anzeigeeinrichtung 7 erzeugt.

Der Speicher 2 und die Visualisierungseinheit 3 können auch durch einen zentralen Server bereitgestellt werden, der beispielsweise über das Internet datentechnisch mit einem lokalen Rechner eines Benutzers gekoppelt ist. In diesem Fall entspricht die Steuereinrichtung 4 dem Benutzer-Rechner oder einer auf dem Benutzer-Rechner ausgeführten Software oder einer innerhalb eines auf dem Benutzer-Rechner laufenden Browser-Programmes ausgeführten Anwendung. Die Steuereinrichtung 4 umfasst dann wiederum die Recheneinheit 5 und ist mit dem Eingabegerät 6 sowie der Anzeigeeinrichtung 7 verbunden ist. Die Verbindungslinie zwischen der Visualisierungseinheit 3 und der Steuereinrichtung 4 stellt dann die datentechnische Kopplung beispielsweise über eine Internetverbindung dar.

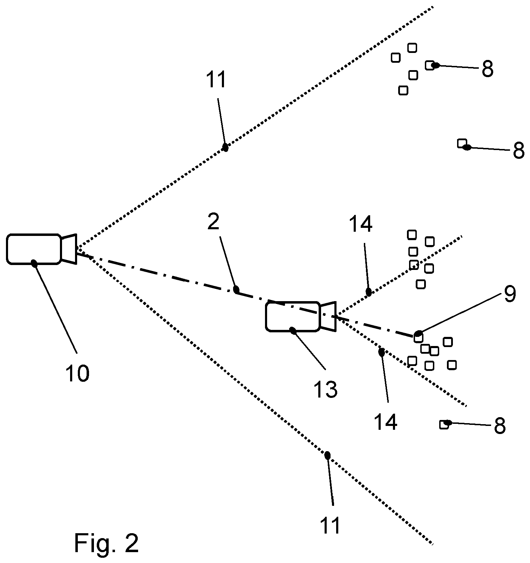

Mit Bezug zu Figur 2 werden die von der Visualisierungseinrichtung 3 erzeugten Darstellungen wie sie bei dem Ausführungsbeispiel des erfindungsgemäßen Verfahrens verwendet werden veranschaulicht:

Im dreidimensionalen Raum befindet sich eine Vielzahl von Oberflächenelementen 8, 9. Die erste Darstellung des digitalen Bildes visualisiert die Oberflächenelemente 8, 9 des dreidimensionalen Raums durch eine zweidimensionale Projektion aus einer ersten Aufnahmepose bei einer ersten Aufnahmeposition mit einem ersten Öffnungswinkel einer ersten virtuellen oder realen Kamera 10 in Richtung des aufgenommenen dreidimensionalen Raums. Der Öffnungswinkel der Kamera 10 wird dabei durch die Strahlen 11 festgelegt, die Aufnahmepose durch die Position und Ausrichtung der Kamera 10, wie es in Figur 2 gezeigt ist.

Wie es später mit Bezug zu dem erfindungsgemäßen Verfahren erläutert wird, ist ein Oberflächenelement 9 ausgezeichnet. Ein dieses Oberflächenelement 9 repräsentierendes Pixel des digitalen Bildes wurde mittels des Eingabegeräts 6 markiert.

Der zweiten Darstellung der Ergänzungsansicht ist eine zweite Aufnahmepose bei einer zweiten Aufnahmeposition und ein zweiter Öffnungswinkel einer zweiten virtuellen Kamera 13 zugeordnet. Der zweite Öffnungswinkel wird durch die Strahlen 14 bestimmt. Die zweite Aufnahmepose und die zweite Aufnahmeposition ergeben sich aus der Anordnung und Ausrichtung der virtuellen Kamera 13, wie es in Figur 2 gezeigt ist. Bei dem in Figur 2 gezeigten Beispiel entspricht die zweite Aufnahmerichtung der ersten Aufnahmerichtung und der zweite Öffnungswinkel dem ersten Öffnungswinkel. Die zweite Aufnahmeposition befindet sich jedoch auf einer Geraden, die von der ersten Aufnahmeposition und dem Oberflächenelement 9 gebildet ist, und zwar zwischen der ersten Aufnahmeposition und dem Oberflächenelement 9, wie es in Figur 2 dargestellt ist. Die zweite virtuelle Kamera 13 befindet sich somit näher an dem Oberflächenelement 9 als die erste Kamera 10. Entsprechend ist der Darstellungsmaßstab der zweiten Darstellung der Ergänzungsansicht größer als der Darstellungsmaßstab der ersten Darstellung des digitalen Bildes.

Der Abstand der zweiten Aufnahmeposition von den zum markierten Pixel ermittelten approximierten Raumkoordinaten kann dabei fest vorgegeben sein. Alternativ kann dieser Abstand auch dynamisch an die in der begrenzten dreidimensionalen Umgebung enthaltenen Oberflächenelemente 8, 9 angepasst werden.

Bei einem weiteren Ausführungsbeispiel kann alternativ oder zusätzlich eine erste zusätzliche Darstellung von der Visualisierungseinrichtung 3 erzeugt werden, bei der die zweite Aufnahmepose der zweiten virtuellen Kamera 13 verändert ist. Beispielsweise kann die zweite Aufnahmepose der zweiten virtuellen Kamera 13 in Abhängigkeit von der Normalen des durch das markierte Pixel visualisierten Oberflächenelements 9 im dreidimensionalen Raum oder in Abhängigkeit von den Normalen der Oberflächenelemente 8 in der Umgebung der zum markierten Pixel ermittelten approximierten Raumkoordinaten berechnet werden.

Es wird darauf hingewiesen, dass die Aufnahmeposen der Kameras 11 und 13 nicht realen Aufnahmeposen von Kameras oder Scannern entsprechen müssen, welche die Daten zu dem digitalen Bild und/oder der Punktwolke aufgenommen haben. Die in Figur 2 gezeigten gegebenenfalls virtuellen Kameras 10 und 13 veranschaulichen nur die von der Visualisierungseinrichtung 3 erzeugten Darstellungen. Der Betrachter nimmt diese Darstellungen so wahr, als ob er den dreidimensionalen Raum mit den Oberflächenelementen 8, 9 aus Sicht der Kameras 10 bzw. 13 wahrnimmt.

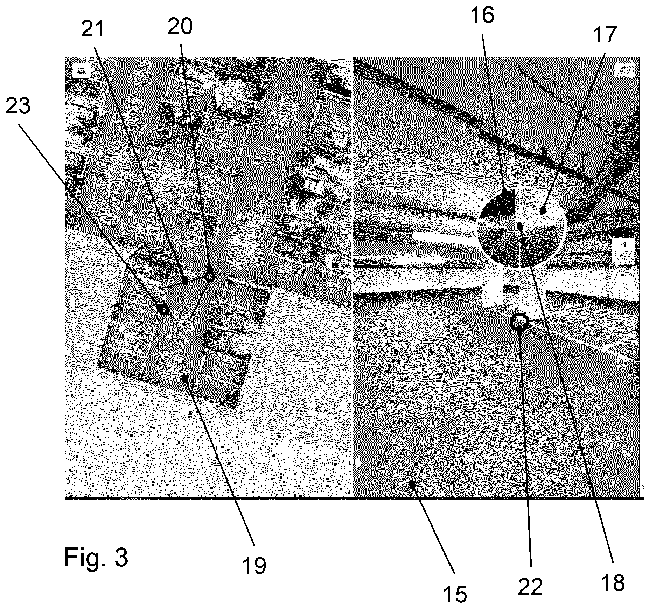

Im Folgenden wird ein Ausführungsbeispiel des erfindungsgemäßen Verfahrens erläutert, wobei das Ausführungsbeispiel der erfindungsgemäßen Vorrichtung weiter erläutert wird. Hierbei wird Bezug auf die Figuren 3 bis 10 genommen, welche auf der Anzeigeeinrichtung 7 wiedergegebene Anzeigen zeigen, die mittels des Ausführungsbeispiels des erfindungsgemäßen Verfahrens und von dem Ausführungsbeispiel der erfindungsgemäßen Vorrichtung erzeugt werden.

Bei dem erfindungsgemäßen Verfahren wird zunächst ein digitales Bild von Oberflächenelementen 8, 9 in einem dreidimensionalen Raum bereitgestellt. Ferner wird eine Punktwolke bereitgestellt, wobei den Punkten, welche die Punktwolke bilden, Raumkoordinaten zugeordnet sind und den Punkten Oberflächenelemente 8, 9 in dem dreidimensionalen Raum zugeordnet sind. Die Bereitstellung des digitalen Bildes und der Punktwolke kann durch den Speicher 2 der Datenverarbeitungseinrichtung 1 erfolgen.

Bei dem Verfahren werden dann die Oberflächenelemente 8, 9 im dreidimensionalen Raum durch eine erste Darstellung 15 des digitalen Bildes visualisiert, wie es in den Figuren 3 bis 12 gezeigt ist.

Mittels des Eingabegeräts 6 kann der Nutzer nun einen Zeiger 22 in der ersten Darstellung 15 des digitalen Bildes bewegen. Ein Pixel des digitalen Bildes wird markiert, indem es in das Zentrum des Zeigers 22 gebracht wird. Das markierte Pixel des digitalen Bildes ist somit dasjenige Pixel, welches sich im Zentrum des Zeigers 22 befindet. Bewegt sich der Zeiger 22 über die erste Darstellung 15 des digitalen Bildes, verändert sich das markierte Pixel des digitalen Bildes fortwährend.

Die Steuereinrichtung 4 erfasst, welches Pixel des digitalen Bildes mittels des Eingabegeräts 6 markiert wurde. Zu dem aktuell markierten Pixel ermittelt die Recheneinheit 5 durch Zugriff auf die Visualisierungseinrichtung 3 und den Speicher 2 approximierte Raumkoordinaten. Die Raumkoordinaten entsprechen dem durch das markierte Pixel visualisierten Oberflächenelement 9 im dreidimensionalen Raum. Bei den approximierten Raumkoordinaten handelt es sich um die Tiefeninformation, die in Verbindung mit dem digitalen Bild in dem Speicher 2 gespeichert sind.

Anschließend wird eine begrenzte dreidimensionale Umgebung der zum markierten Pixel ermittelten approximierten Raumkoordinaten erzeugt. Im beschriebenen Ausführungsbeispiel wird ein Würfel gebildet, welcher die approximierten Raumkoordinaten umfasst, die zu dem markierten Pixel gehören. Die Daten zu dieser begrenzten dreidimensionalen Umgebung werden von der Visualisierungseinrichtung genutzt, um daraufhin eine zweite Darstellung der in der begrenzten dreidimensionalen Umgebung liegenden Punkte der Punktwolke zu erzeugen. Die zweite Darstellung 17 wird als Ergänzungsansicht 16 in die erste Darstellung 15 des digitalen Bildes eingeblendet. Da die zweite Darstellung 17 der Ergänzungsansicht 16 die dreidimensionale Umgebung um die zum (durch den Zeiger 22) markierten Pixel ermittelten approximierten Raumkoordinaten in einem vergrößerten Darstellungsmaßstab darstellt, wird die Ergänzungsansicht 16 auch als Lupenansicht bezeichnet.

In Figur 3 markiert der Zeiger 22 ein Pixel des digitalen Bildes in der ersten Darstellung 15, welches den Beginn eines Pfeilers visualisiert. In der Ergänzungsansicht 16 werden für eine begrenzte dreidimensionale Umgebung dieses Bereichs Punkte der Punktwolke dargestellt, welche auf andere Weise den Beginn des Pfeilers visualisieren. Dabei wird das im digitalen Bild der ersten Darstellung 15 markierte Pixel in der zweiten Darstellung 17 der Ergänzungsansicht 16 als hervorgehobener Punkt 18 dargestellt. Es ist somit ein Punkt 18 der Punktwolke, der in der zweiten Darstellung 17 dargestellt ist, hervorgehoben gegenüber anderen Punkten der Punktwolke der begrenzten dreidimensionalen Umgebung. Im Unterscheid zu einem Pixel der ersten Darstellung 15 des digitalen Bildes ist der zugeordnete Punkt 18 der Punktwolke einem Messwert des Laserscanners, mittels welchem die Punktwolke erzeugt worden ist, zugeordnet. Mittels des Eingabegeräts 6 kann somit ein bestimmter Punkt 18 der Punktwolke durch einen Bedienvorgang ausgewählt werden. Durch Zugriff auf den Speicher 2 können die exakte Raumkoordinaten des ausgewählten Punktes 18 der Punktwolke ermittelt werden. Auf diese Weise kann eine bestimmte Raumkoordinate sehr präzise ausgewählt werden, da das digitale Bild zwar eine Übersicht der Oberflächenelemente 8, 9 in einem dreidimensionalen Raum visualisiert, die Auswahl einer bestimmten Raumkoordinate jedoch unter Zuhilfenahme der zweiten Darstellung 17 der Ergänzungsansicht 16 erfolgt, welche tatsächlich gemessene Punkte der Punktwolke darstellt, zu denen exakte Raumkoordinaten in dem Speicher 2 gespeichert sind.

Die begrenzte dreidimensionale Umgebung der zum markierten Pixel ermittelten Raumkoordinaten umfasst dabei nur Punkte der Punktwolke, deren Raumkoordinaten einen Abstand von der ersten Aufnahmeposition der ersten Kamera 10 haben, der geringer als ein Grenzabstand ist. Bereiche in der zweiten Darstellung 17, in denen sich Punkte befinden, die außerhalb dieser begrenzten dreidimensionalen Umgebung sind, werden schwarz dargestellt. Auf diese Weise kann der Nutzer unmittelbar erkennen, wenn der Zeiger 22 unbeabsichtigt ein Pixel in der ersten Darstellung 15 des digitalen Bildes markiert, welches zu Raumkoordinaten gehört, die weit hinter den Raumkoordinaten des Pixels sind, welches der Nutzer eigentlich markieren will. Hierdurch wird dem Nutzer die Orientierung beim Auswählen der Raumkoordinate erleichtert.

Um dem Nutzer eine weitere Orientierungsmöglichkeit zu bieten, wird mithilfe der Visualisierungseinrichtung 3 eine zweite zusätzliche Darstellung 19 der Oberflächenelemente 8, 9 in dem dreidimensionalen Raum erzeugt und mittels der Steuereinrichtung 4 und der Anzeigeeinrichtung 7 angezeigt. Wie in Figur 3 gezeigt, zeigt die zweite zusätzliche Darstellung 19 die Oberflächenelemente 8, 9 im dreidimensionalen Raum aus einer anderen Perspektive als die erste Darstellung 15 des digitalen Bildes. Der dreidimensionale Raum wird von oben gezeigt.

In der zweiten zusätzlichen Darstellung 19 wird ein erster Indikator 20 für die erste Aufnahmeposition der ersten Kamera 10 und ein zweiter Indikator 21 für die Aufnahmerichtung und den Öffnungswinkel der ersten Kamera 10 angezeigt. Des Weiteren wird ein dritter Indikator 23 für die approximierten Raumkoordinaten des in der ersten Darstellung 15 markierten Pixels angezeigt. Auf diese Weise kann der Betrachter sehr schnell und einfach erkennen, ob er das gewünschte Oberflächenelement 9 markiert hat oder ob er sich gegebenenfalls mit dem Zeiger 22 in der ersten Darstellung 15 auf einem weit dahinterliegenden Oberflächenelement 8 befindet. Das visualisierende Pixel des dahinterliegenden Oberflächenelements 8 kann zwar benachbart zu dem Pixel sein, welches markiert werden soll. Dies ist jedoch in der zweidimensionalen Projektion der ersten Darstellung 15 nicht ohne weiteres erkennbar. In der zweiten zusätzlichen Darstellung 19 ist jedoch sofort erkennbar, ob sich der dritte Indikator bei der dargestellten Säule befindet oder beispielsweise auf der dahinterliegenden Wand.

In der zweiten zusätzlichen Darstellung 19 oder in der ersten Darstellung 15 oder in der zweiten Darstellung 17 der Ergänzungsansicht 16 kann bei einem weiteren Ausführungsbeispiel außerdem der Abstand der zum markierten Pixel ermittelten approximierten Raumkoordinaten von der ersten und/oder der zweiten Aufnahmeposition angezeigt werden.

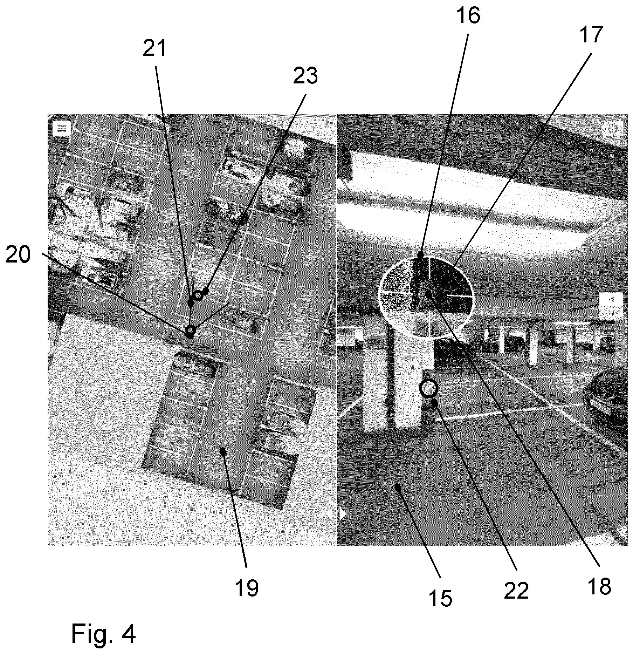

In Figur 4 ist eine weitere Anzeige der Anzeigeeinrichtung 7 gezeigt, welche von dem erfindungsgemäßen Verfahren erzeugt worden ist. In diesem Fall sollen die Raumkoordinaten eines Oberflächenelements 9 eines Leitkegels ausgewählt werden. Der Leitkegel ist in der ersten Darstellung 15 des digitalen Bildes realitätsnah und gut erkennbar dargestellt. Die Tiefeninformationen zu den Pixel des Leitkegels sind jedoch ungenau. In der Ergänzungsansicht 16 ist der Leitkegel zwar schwerer erkennbar, es werden jedoch Punkte dargestellt, die exakten Messwerten von Oberflächenelementen des Leitkegel entsprechen. Der Nutzer kann einen dieser Punkte auswählen, sodass eine Raumkoordinate eines Oberflächenelements des Leitkegel präzise ausgewählt werden kann.

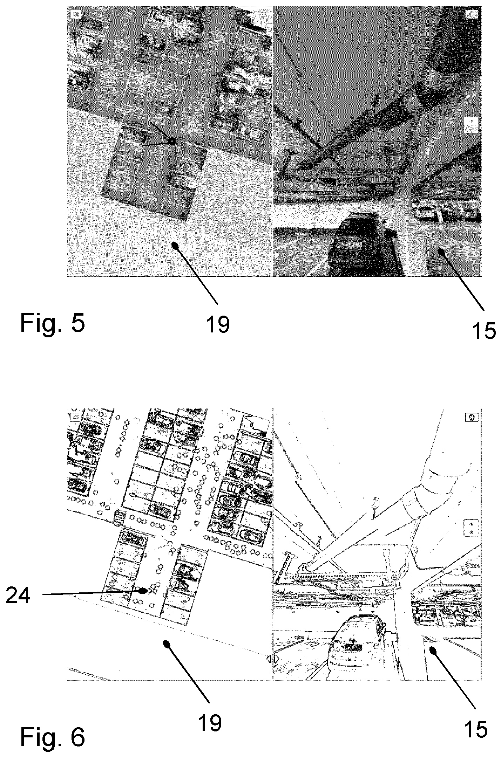

Mit Bezug zu den Figuren 5 bis 12 wird die Auswahl einer Raumkoordinate eines Lüftungsrohrs erläutert, dessen erste Darstellung Artefakte aufweist. Diese Artefakte haben sich beim sogenannten Stitching beim Erzeugen eines Panoramabilds ergeben. Dabei entsprechen die Figuren 6, 8, 10 und 12 den Figuren 5, 7, 9 und 11, wobei jeweils nur eine andere Darstellungsweise gewählt wurde.

Figur 5 bzw. Figur 6 zeigt die erste Darstellung 15, bei der das Lüftungsrohr oberhalb eines Fahrzeugs angeordnet ist. Direkt oberhalb der Darstellung des Fahrzeugs ist bei dem Lüftungsrohr ein Artefakt zu sehen. Das Lüftungsrohr ist unterbrochen. Dies war tatsächlich bei der Aufnahme der Einzelbilder des dreidimensionalen Raums, welcher das Lüftungsrohr enthielt, nicht der Fall.

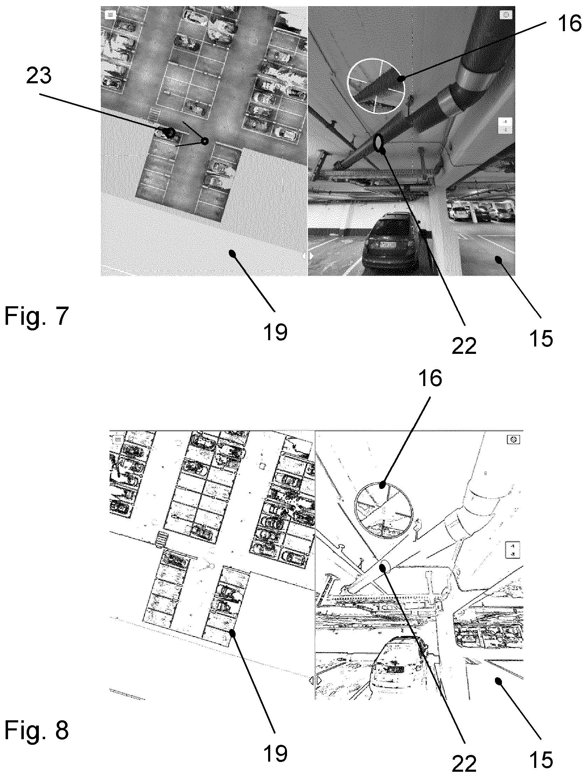

Wie in den Figuren 7 und 8 gezeigt, kann der Nutzer nun mittels des Eingabegeräts 6 den Zeiger 22 auf die Darstellung des Lüftungsrohrs bewegen. Es wird eine Ergänzungsansicht 16 eingeblendet, in der Punkte der Punktwolke, die in der begrenzten dreidimensionalen Umgebung der zum markierten Pixel approximierten Raumkoordinaten liegen, in der zweiten Darstellung dargestellt werden.

In der Ergänzungsansicht 16 können bei einem weiteren Ausführungsbeispiel die Normale und die Flächentangenten des durch das markierte Pixel visualisierten Oberflächenelements angezeigt werden.

Wie in Figur 6 dargestellt, kann die zweite zusätzliche Darstellung auch Positionsindikatoren 24 für erste Aufnahmepositionen bei der Aufnahme von digitalen Einzelbildern enthalten, aus welchen das digitale Bild zusammengesetzt ist. In der ersten Darstellung werden Panoramabilder angezeigt, die zu diesen Positionsindikatoren 24 gehören.

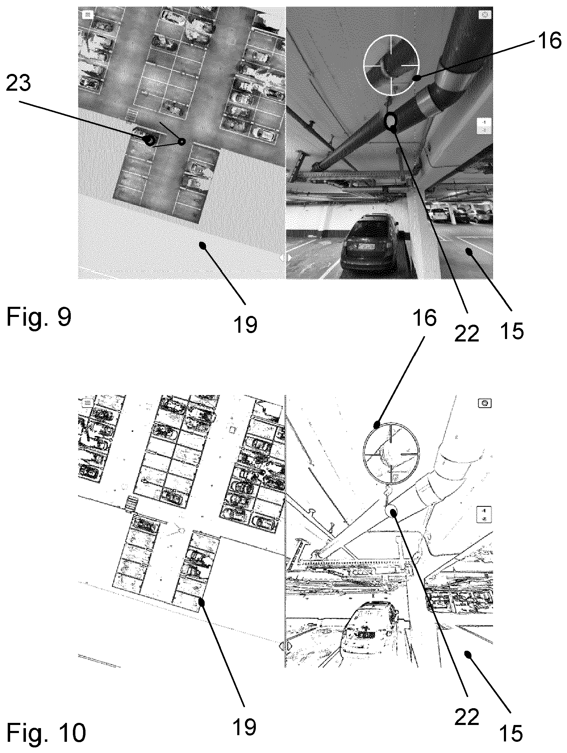

Nun kann der Nutzer den Zeiger 22 in der ersten Darstellung auf das Artefakt in der ersten Darstellung zu bewegen. In den Figuren 9 und 10 befindet sich der Zeiger 22 direkt bei dem Artefakt des Lüftungsrohres in der ersten Darstellung des digitalen Bildes. Da die in der zweiten Darstellung dargestellten Punkte der Punktwolke jedoch die Messwerte des Laserscanners visualisieren, ergibt sich in der Ergänzungsansicht 16 kein Artefakt. Das Lüftungsrohr wird korrekt ohne Versatz dargestellt. Mittels der Ergänzungsansicht 16 kann der Nutzer nun durch Bewegung des Zeigers 22 sehr präzise einen Punkt der Punktwolke auswählen, welcher zu dem Lüftungsrohr im Bereich des Artefakts bei der ersten Darstellung 15 des digitalen Bildes liegt. Eine solche präzise Auswahl wäre mittels der ersten Darstellung 15 des digitalen Bildes nicht möglich.

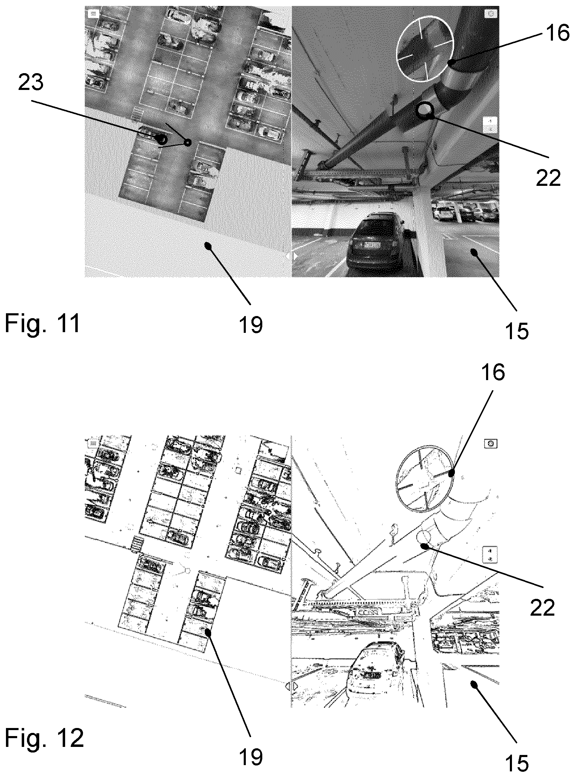

Bewegt der Nutzer den Zeiger 22 weiter auf der ersten Darstellung des Lüftungsrohrs, wie es in den Figuren 11 und 12 dargestellt ist, entspricht die zweite Darstellung der Ergänzungsansicht 16 wieder im Wesentlichen der ersten Darstellung 15 des digitalen Bildes.

Bei dem hier beschriebenen Ausführungsbeispiel wurden von dem digitalen Bild dieselben Oberflächenelemente 8, 9 aufgenommen, wie sie auch von dem Laserscanner beim Erzeugen der Punktwolke erfasst worden sind. Bei einem alternativen Ausführungsbeispiel können jedoch vom Laserscanner weniger Oberflächenelemente erfasst worden sein. Beispielsweise kann bei der Konstruktion eines Gebäudes der dreidimensionale Raum von dem Laserscanner zu einem früheren Zeitpunkt erfasst worden sein als bei der Aufnahme der Einzelbilder für das Panoramabild des digitalen Bildes. In diesem Fall können die Punkte der Punktwolke beispielsweise bestimmte Oberflächen, wie Wände oder Decken, nicht enthalten, so dass in der Ergänzungsansicht 16 durch diese Oberflächenelemente 8, 9, die in der ersten Darstellung 15 angezeigt werden, hindurchgesehen werden kann. Sie werden von Punkten der Punktwolke in der zweiten Darstellung nicht dargestellt.

Bei einem alternativen Ausführungsbeispiel bewegt sich die zweite Darstellung 17 der Ergänzungsansicht 16 nicht unmittelbar synchron mit dem Zeiger 22 in der ersten Darstellung 15. Vielmehr wird in der ersten Darstellung 15 des digitalen Bildes ermittelt, welche Pixel Kanten repräsentieren. Wenn der Zeiger 22 von einem Pixel, welches eine Kante darstellt, zu einem Pixel bewegt wird, welches nicht zu dieser Kante gehört, wird in der Ergänzungsansicht 16 zunächst auch dann die zweite Darstellung 17 für das Pixel dargestellt, welches eine Kante darstellt, auch wenn der Zeiger 22 sich bereits bei dem Pixel befindet, welches nicht zu der Kante gehört. Erst wenn der Zeiger 22 sich bei einem Pixel befindet, welches einen bestimmten Abstand von einem Pixel hat, welches eine Kante repräsentiert, springt die zweite Darstellung 17 der Ergänzungsansicht 16 zu einer Darstellung, welche zu dem Pixel der ersten Darstellung 15 gehört, bei welchem sich der Zeiger 22 befindet. Alternativ kann dieser Sprung auch erst dann erfolgen, wenn nach Erreichen des Kanten-Pixels eine eine bestimmte Anzahl an weiteren Bewegungsereignissen aufgetreten oder ein bestimmtes Zeitintervall verstrichen ist.

Mittels des erfindungsgemäßen Verfahrens kann auf einfache Weise auch der Abstands zweier Punkte im dreidimensionalen Raum ermittelt werden. Hierfür wird wie vorstehend erläutert ein erster und ein zweiter Punkt der Punktwolke ausgewählt. Aus den Raumkoordinaten zu diesen beiden Punkten kann dann der räumlichen Abstand der beiden Punkte berechnet werden.

In ähnlicher Weise kann auch ein Oberflächensegment, das in dem digitalen Bild dargestellt wird, ausgeschnitten werden. Hierfür wird eine Vielzahl von in der Ergänzungsansicht 16 dargestellten Punkten der Punktwolke ausgewählt. Mittels der ausgewählten Punkte wird das Oberflächensegment in dem digitalen Bild dann abgegrenzt und ausgeschnitten.

### Bezugszeichenliste

- 1: Datenverarbeitungseinrichtung
- 2: Speicher
- 3: Visualisierungseinrichtung
- 4: Steuereinrichtung
- 5: Recheneinheit
- 6: Eingabegerät
- 7: Anzeigeeinrichtung
- 8: Oberflächenelemente
- 9: Oberflächenelement eines markierten Pixels
- 10: erste virtuelle oder reale Kamera
- 11: Strahlen
- 12: Gerade
- 13: zweite virtuelle Kamera
- 14: Strahlen
- 15: erste Darstellung
- 16: Ergänzungsansicht
- 17: zweite Darstellung
- 18: Punkt der Punktwolke
- 19: zweite zusätzliche Darstellung
- 20: erster Indikator
- 21: zweiter Indikator
- 22: Zeiger
- 23: dritter Indikator
- 24: Positionsindikatoren

## Patentansprüche

1. Computer-implementiertes Verfahren zum präzisen Auswählen einer Raumkoordinate mittels eines digitalen Bildes, bei dem:
ein digitales Bild von Oberflächenelementen (8, 9) in einem dreidimensionalen Raum bereitgestellt wird,
eine Punktwolke bereitgestellt wird, wobei den Punkten, welche die Punktwolke bilden, Raumkoordinaten zugeordnet sind und den Punkten Oberflächenelemente (8, 9) in dem dreidimensionalen Raum zugeordnet sind,
die Oberflächenelemente (8, 9) im dreidimensionalen Raum durch eine erste Darstellung (15) des digitalen Bildes visualisiert werden,
ein Pixel des digitalen Bildes markiert wird, indem ein Zeiger (22) in der ersten Darstellung (15) des digitalen Bildes bewegt wird, wobei sich das markierte Pixel des digitalen Bildes fortwährend verändert, wenn sich der Zeiger (22) über die erste Darstellung (15) des digitalen Bildes bewegt,
approximierte Raumkoordinaten zum markierten Pixel ermittelt werden, die dem durch das markierte Pixel visualisierten Oberflächenelement (9) im dreidimensionalen Raum entsprechen,
eine Ergänzungsansicht (16) in die erste Darstellung (15) des digitalen Bildes eingeblendet wird, welche die in einer begrenzten dreidimensionalen Umgebung der zum markierten Pixel ermittelten approximierten Raumkoordinaten liegenden Punkte (18) der Punktwolke in einer zweiten Darstellung (17) darstellt, wobei der Darstellungsmaßstab der zweiten Darstellung (17) größer ist als der Darstellungsmaßstab der ersten Darstellung (15) des digitalen Bildes, und
ein in der Ergänzungsansicht (16) dargestellter Punkt (18) der Punktwolke ausgewählt wird.

2. Verfahren nach Anspruch 1
**dadurch gekennzeichnet, dass**
das digitale Bild die Oberflächenelemente (8, 9) des dreidimensionalen Raums durch eine zweidimensionale Projektion aus einer ersten Aufnahmepose bei einer ersten Aufnahmeposition mit einem ersten Öffnungswinkel einer ersten virtuellen oder realen Kamera (10) in Richtung des aufgenommenen dreidimensionalen Raums visualisiert.

3. Verfahren nach Anspruch 1 oder 2
**dadurch gekennzeichnet, dass**
der zweiten Darstellung (17) der Ergänzungsansicht (16) eine zweite Aufnahmepose bei einer zweiten Aufnahmeposition und ein zweiter Öffnungswinkel einer zweiten virtuellen Kamera (13) zugeordnet ist, welche die Perspektive der Darstellung der begrenzten dreidimensionalen Umgebung bestimmt.

4. Verfahren nach einem der vorhergehenden Ansprüche,
**dadurch gekennzeichnet, dass**
die begrenzte dreidimensionale Umgebung der zum markierten Pixel ermittelten Raumkoordinaten nur Punkte umfasst, deren Raumkoordinaten einen Abstand von der ersten und/oder der zweiten Aufnahmeposition haben, der geringer als ein Grenzabstand ist.

5. Verfahren nach einem der Ansprüche 3 oder 4,
**dadurch gekennzeichnet, dass**
eine zweite zusätzliche Darstellung (19) der Oberflächenelemente (8, 9) oder der Punkte der Punktwolke (18) in dem dreidimensionalen Raum erzeugt und angezeigt wird, wobei die zweite zusätzliche Darstellung (19) den dreidimensionalen Raum aus einer anderen Perspektive als die erste Darstellung (15) des digitalen Bildes zeigt, und
in der zweiten zusätzlichen Darstellung (19) ein erster Indikator (20) für die erste Aufnahmeposition und/oder ein zweiter Indikator (21) für die Aufnahmerichtung und/oder den Öffnungswinkel der ersten virtuellen oder realen Kamera (10) und/oder ein dritter Indikator (23) für die approximierten Raumkoordinaten des markierten Pixels angezeigt wird/werden.

6. Verfahren nach einem der vorhergehenden Ansprüche,
**dadurch gekennzeichnet, dass**
einem Punkt (18) der Punktwolke Raumkoordinaten zugeordnet sind, bei denen sich ein Oberflächenelement (8, 9) befindet, welches einen Laserstrahl eines Laserscanners beim Erfassen des dreidimensionalen Raums abgelenkt hat.

7. Verfahren nach einem der vorhergehenden Ansprüche,
**dadurch gekennzeichnet, dass**
einer Teilmenge der Oberflächenelemente (8, 9), die bei der ersten Darstellung (15) des digitalen Bildes visualisiert werden, keine Punkte der Punktwolke zugeordnet sind, sodass die Punktwolke weniger Oberflächenelemente (8, 9) darstellt als das digitale Bild.

8. Computer-implementiertes Messverfahren zum Ermitteln des Abstands zweier Punkte im dreidimensionalen Raum, bei dem:
mittels des Verfahrens nach einem der Ansprüche 1 bis 7 ein in der Ergänzungsansicht (16) dargestellter erster Punkt (18) der Punktwolke ausgewählt wird,
erste Raumkoordinaten des ersten Punktes (18) ermittelt werden,
mittels des Verfahrens nach einem der Ansprüche 1 bis 7 ein in der Ergänzungsansicht (16) dargestellter zweiter Punkt (18) der Punktwolke ausgewählt wird,
zweite Raumkoordinaten des zweiten Punktes (18) ermittelt werden,
aus den ersten und zweiten Raumkoordinaten der räumliche Abstand des ersten Punktes (18) von dem zweiten Punkt (18) berechnet wird.

9. Vorrichtung zum präzisen Auswählen einer Raumkoordinate mittels eines digitalen Bildes, mit:
einem Speicher (2), in dem Daten zu zumindest einem digitalen Bild von Oberflächenelementen (8, 9) in einem dreidimensionalen Raum und zu einer Punktwolke gespeichert sind, wobei den Punkten, welche die Punktwolke bilden, Raumkoordinaten zugeordnet sind und den Punkten Oberflächenelemente (8, 9) in dem dreidimensionalen Raum zugeordnet sind,
einer Visualisierungseinrichtung (3), die datentechnisch mit dem Speicher (2) gekoppelt ist und die eingerichtet ist, die Oberflächenelemente (8, 9) im dreidimensionalen Raum durch eine erste Darstellung (15) des digitalen Bildes zu visualisieren,
einem Eingabegerät (6) zum Markieren eines Pixels des digitalen Bildes mittels eines Zeigers (22), wobei das Eingabegerät (6) ausgebildet ist, zum Markieren des Pixels des digitalen Bildes den Zeiger (22) in der ersten Darstellung (15) des digitalen Bildes zu bewegen, wobei sich das markierte Pixel des digitalen Bildes fortwährend verändert, wenn sich der Zeiger (22) über die erste Darstellung (15) des digitalen Bildes bewegt,
einer Recheneinheit (5), die eingerichtet ist, approximierte Raumkoordinaten zum markierten Pixel zu ermitteln, die dem durch das markierte Pixel visualisierten Oberflächenelement (9) im dreidimensionalen Raum entsprechen,
wobei die Visualisierungseinrichtung (3) ferner eingerichtet ist, eine Ergänzungsansicht (16) zu erzeugen und in die erste Darstellung (15) des digitalen Bildes einzublenden, welche die in einer begrenzten dreidimensionalen Umgebung der zum markierten Pixel ermittelten approximierten Raumkoordinaten liegenden Punkte der Punktwolke in einer zweiten Darstellung (17) darstellt, wobei der Darstellungsmaßstab der zweiten Darstellung (17) größer ist als der Darstellungsmaßstab der ersten Darstellung (15) des digitalen Bildes,
wobei mittels des Eingabegeräts (6) ein in der Ergänzungsansicht (16) dargestellter Punkt (18) der Punktwolke auswählbar ist.

## Claims

1. Computer-implemented method for precise selection of a space coordinate by means of a digital image, in which:
providing a digital image of surface elements (8,9) in a three-dimensional space,
providing a point cloud, wherein space coordinates are allocated to the points that form the point cloud and surface elements (8,9) are allocated to the points in the three-dimensional space,
visualizing the surface elements (8,9) in the three-dimensional space by a first display (15) of the digital image,
tagging a pixel of the digital image by moving a cursor (22) in the first display (15) of the digital image, wherein, if the cursor (22) moves over the first display (15) of the digital image, the tagged pixel of the digital image changes constantly,
determining approximate space coordinates for the tagged pixel, which correspond to the surface element (9) visualized by the tagged pixel in the three-dimensional space,
superimposing on the first display (15) of the digital image a supplementary view (16), which displays, in a second display (17), the points (18) of the point cloud which are located in a limited three-dimensional environment of the approximate space coordinates ascertained for the tagged pixel, the display scale of the second display (17) being larger than the display scale of the first display (15) of the digital image, and
selecting a point (18) of the point cloud displayed in the supplementary view (16).

2. The method according to claim 1,
**characterized in that**
the digital image visualizes the surface elements (8, 9) of the three-dimensional space by a two-dimensional projection from a first recording pose in a first recording position with a first opening angle of a first virtual or real camera (10) in the direction of the recorded three-dimensional space.

3. The method according to claim 1 or 2,
**characterized in that**
a second recording pose is allocated to the second display (17) of the supplementary view (16) in a second recording position, and a second opening angle is allocated to a second virtual camera (13), the opening angle determining the perspective of the display of the limited three-dimensional environment.

4. The method according to one of the preceding claims,
**characterized in that**
the limited three-dimensional environment of the space coordinates ascertained for the tagged pixel only comprises points whose space coordinates have a distance from the first and/or second recording position which is smaller than a threshold distance.

5. The method according to one of claims 3 or 4,
**characterized in that**
a second supplementary display (19) of the surface elements (8, 9) or of the points of the point cloud (18) in the three-dimensional space is generated and displayed, wherein the second supplementary display (19) shows the three-dimensional space from a different perspective than the first display (15) of the digital image, and
in the second supplementary display (19), a first indicator (20) for the first recording position and/or a second indicator (21) for the recording direction and/or the opening angle of the first virtual or real camera (10) and/or a third indicator (23) for the approximate space coordinates of the tagged pixel is/are displayed.

6. The method according to one of the preceding claims,
**characterized in that**
space coordinates are allocated to a point (18) of the point cloud, in which a surface element (8, 9) is located which has diverted a laser beam of a laser scanner during the capture of the three-dimensional space.

7. The method according to one of the preceding claims,
**characterized in that**
no points of the point cloud are allocated to a subset of the surface elements (8, 9) which are visualized in the first display (15) of the digital image, so that the point cloud displays fewer surface elements (8, 9) than the digital image.

8. A computer-implemented measuring method for the determination of the distance between two points in the three-dimensional space, in which:
a first point (18) in the point cloud displayed in the supplementary view (16) is selected by means of the method according to one of claims 1 to 7,
first space coordinates of the first point (18) are determined,
a second point (18) of the point cloud displayed in the supplementary view (16) is selected by means of the method according to one of claims 1 to 7,
second space coordinates of the second point (18) are determined,
the spatial distance between the first point (18) and the second point (18) is calculated from the first and second space coordinates.

9. A device for precise selection of a space coordinate by means of a digital image, the device comprising:
a memory (2), in which data about at least one digital image of surface elements (8, 9), and about a point cloud, is saved in a three-dimensional space, wherein space coordinates are allocated to the points which form the point cloud and surface elements (8, 9) are allocated to the points in the three-dimensional space,
visualization equipment (3), linked to the memory (2) through a datalink, and equipped to visualize the surface elements (8, 9) in the three-dimensional space by a first display (15) of the digital image,
an input device (6) for the tagging of a pixel of the digital image by means of a cursor (22), wherein the input device (6) is configured to move the cursor (22) in the first display (15) of the digital image for tagging the pixel of the digital image, wherein, if the cursor (22) moves over the first display (15) of the digital image, the tagged pixel of the digital image changes constantly,
a calculator unit (5), which is equipped to determine approximate space coordinates for the tagged pixel, which correspond to the surface element (9) visualized by the marked pixel in three-dimensional space,
wherein the visualization equipment (3) is further equipped to generate and superimpose on the first display (15) of the digital image a supplementary view (16) which displays, in a second display (17), points of the point cloud located in a limited three-dimensional environment of the approximate space coordinates determined for the tagged pixel, the display scale of the second display (17) being larger than the display scale of the first display (15) of the digital image,
wherein a point (18) of the point cloud depicted in the supplementary view (16) is selectable with the input device (6).

## Revendications

1. Procédé mis en œuvre par ordinateur pour la sélection précise d'une coordonnée spatiale au moyen d'une image numérique, dans lequel :
une image numérique d'éléments de surface (8, 9) présents dans un espace tridimensionnel est fournie,
un nuage de points est fourni, des coordonnées spatiales étant associés aux points formant ledit nuage de points et des éléments de surface (8, 9) présents dans l'espace tridimensionnel étant associés auxdits points,
les éléments de surface (8, 9) présents dans l'espace tridimensionnel sont visualisés par une première représentation (15) de l'image numérique,
un pixel de l'image numérique est marqué par déplacement d'un repère (22) dans la première représentation (15) de l'image numérique, le pixel marqué de l'image numérique changeant continuellement à mesure que le repère (22) se déplace sur la première représentation (15) de l'image numérique,
des coordonnées spatiales approximées relatives au pixel marqué et correspondant à l'élément de surface (9) visualisé par le pixel marqué dans l'espace tridimensionnel sont déterminées,
une vue complémentaire (16) est superposée à la première représentation (15) de l'image numérique, laquelle vue représente dans une deuxième représentation (17) les points (18) du nuage de points qui se trouvent au proche voisinage tridimensionnel des coordonnées spatiales approximées déterminées relativement au pixel marqué, l'échelle selon laquelle est représentée la deuxième représentation (17) étant supérieure à celle de la première représentation (15) de l'image numérique, et
un point (18) du nuage de points qui est représenté dans la vue complémentaire (16) est sélectionné.

2. Procédé selon la revendication 1,
**caractérisé en ce que**
l'image numérique visualise les éléments de surface (8, 9) de l'espace tridimensionnel au moyen d'une projection bidimensionnelle à partir d'une première pose de prise de vue à une première position de prise de vue avec un premier angle d'ouverture d'une première caméra virtuelle ou réelle (10) dirigée vers l'espace tridimensionnel capturé.

3. Procédé selon la revendication 1 ou 2,
**caractérisé en ce que**
il est associé à la deuxième représentation (17) de la vue complémentaire (16) une deuxième pose de prise de vue à une deuxième position de prise de vue et un deuxième angle d'ouverture d'une deuxième caméra virtuelle (13) qui établit la perspective de la représentation dudit proche voisinage tridimensionnel.

4. Procédé selon l'une des revendications précédentes,
**caractérisé en ce que**
ledit proche voisinage tridimensionnel des coordonnées spatiales déterminées relativement au pixel marqué ne comprend que les points dont les coordonnées spatiales ont une distance par rapport à la première et/ou à la deuxième position de prise de vue qui est inférieure à une distance limite.

5. Procédé selon l'une des revendications 3 et 4,
**caractérisé en ce que**
une deuxième représentation supplémentaire (19) des éléments de surface (8, 9) ou des points du nuage de points (18) présents dans l'espace tridimensionnel est générée et affichée, ladite deuxième représentation supplémentaire (19) montrant l'espace tridimensionnel avec une perspective différente de celle de la première représentation (15) de l'image numérique, et
il est affiché, dans la deuxième représentation supplémentaire (19), un premier indicateur (20) relatif à la première position de prise de vue et/ou un deuxième indicateur (21) relatif à la direction de prise de vue et/ou à l'angle d'ouverture de la première caméra virtuelle ou réelle (10), et/ou un troisième indicateur (23) relatif aux coordonnées spatiales approximées du pixel marqué.

6. Procédé selon l'une des revendications précédentes,
**caractérisé en ce que**
des coordonnées spatiales sont associées à un point (18) du nuage de points où se trouve un élément de surface (8, 9) ayant fait dévier un faisceau laser d'un scanner laser lors de la capture de l'espace tridimensionnel.

7. Procédé selon l'une des revendications précédentes,
**caractérisé en ce que**
aucun point du nuage de points n'est associé à un sous-ensemble des éléments de surface (8, 9) qui sont visualisés dans la première représentation (15) de l'image numérique, si bien que le nuage de points représente moins d'éléments de surface (8, 9) que l'image numérique.

8. Procédé de mesure mis en œuvre par ordinateur pour déterminer la distance entre deux points dans l'espace tridimensionnel, dans lequel :
au moyen du procédé selon l'une des revendications 1 à 7, un premier point (18) du nuage de points, qui est représenté dans la vue complémentaire (16), est sélectionné,
des premières coordonnées spatiales du premier point (18) sont déterminées,
au moyen du procédé selon l'une des revendications 1 à 7, un deuxième point (18) du nuage de points, qui est représenté dans la vue complémentaire (16), est sélectionné,
des deuxièmes coordonnées spatiales du deuxième point (18) sont déterminées,
la distance spatiale entre le premier point (18) et le deuxième point (18) est calculée à partir des premières et deuxièmes coordonnées spatiales.

9. Dispositif de sélection précise d'une coordonnée spatiale à l'aide d'une image numérique, comprenant :
une mémoire (2) dans laquelle sont stockées des données relatives à au moins une image numérique d'éléments de surface (8, 9) présents dans un espace tridimensionnel et relatives à un nuage de points, des coordonnées spatiales étant associées aux points formant le nuage de points et des éléments de surface (8, 9) présents dans l'espace tridimensionnel étant associés aux points,
un dispositif de visualisation (3) qui est couplé à la mémoire (2) pour un échange de données et qui est conçu pour visualiser les éléments de surface (8, 9) présents dans l'espace tridimensionnel à l'aide d'une première représentation (15) de l'image numérique,
un périphérique d'entrée (6) pour marquer un pixel de l'image numérique au moyen d'un repère (22), ledit périphérique d'entrée (6) étant conçu, afin de marquer le pixel de l'image numérique, pour déplacer le repère (22) présent dans la première représentation (15) de l'image numérique, ledit pixel marqué de l'image numérique changeant continuellement à mesure que le repère (22) se déplace sur la première représentation (15) de l'image numérique,
une unité de calcul (5) conçue pour déterminer des coordonnées spatiales approximées relatives au pixel marqué et qui correspondent à l'élément de surface (9) présent dans l'espace tridimensionnel et visualisé par le pixel marqué ;
ledit dispositif de visualisation (3) étant en outre conçu pour générer une vue complémentaire (16) et pour la superposer à la première représentation (15) de l'image numérique, laquelle vue représente dans une deuxième représentation (17) les points du nuage de points qui se trouvent au proche voisinage tridimensionnel des coordonnées spatiales approximées déterminées relativement au pixel marqué, l'échelle selon laquelle est représentée la deuxième représentation (17) étant supérieure à celle de la première représentation (15) de l'image numérique ;
un point (18) du nuage de points affiché dans la vue complémentaire (16) pouvant être sélectionné à l'aide du périphérique d'entrée (6).
